# EUROPEAN PATENT APPLICATION

(11) **EP 4 307 736 A1**
(43) Date of publication of application: **17.01.2024**
(21) Application number: 22784017.0
(22) Date of filing: 02.04.2022
(51) Int. Cl.: H04W 8/14

(54) **COMMUNICATION METHOD AND APPARATUS**

(30) Priority: 06.04.2021 CN 202110369453; 07.07.2021 CN 202110768913
(71) Applicant: Huawei Technologies Co., Ltd., Longgang Shenzhen, Guangdong 518129 (CN)
(72) Inventor: ZHU, Hualin, Shenzhen, Guangdong 518129 (CN)
(74) Representative: Thun, Clemens
(86) International application number: PCT/CN2022/085179
(87) International publication number: WO 2022/213951

(57) **Abstract**

This application provides a communication method and apparatus, to resolve a problem that a terminal device cannot access an NPN that the terminal device wants to access, thereby obtaining a corresponding network service, and improving user experience. The method and the apparatus may be applied to systems such as NR and LTE. The method includes: receiving first network information of a terminal device, and sending a first identifier of a first provisioning server PVS to the terminal device, where the first network information includes network information of a first non-public network NPN and/or network information corresponding to the first PVS, and the first identifier corresponds to the first network information.

## Description

This application claims priority to Chinese Patent Application No. 202110369453.1, filed with the China National Intellectual Property Administration on April 6, 2021 and entitled "COMMUNICATION METHOD AND APPARATUS", and claims priority to Chinese Patent Application No. 202110768913.8, filed with the China National Intellectual Property Administration on July 7, 2021 and entitled "COMMUNICATION METHOD AND APPARATUS", which are incorporated herein by reference in their entireties.

### TECHNICAL FIELD

This application relates to the communications field, and in particular, to a communication method and apparatus.

### BACKGROUND

Currently, a terminal device may access a corresponding non-public network (non-public network, NPN), for example, a standalone non-public network (standalone non-public network, SNPN) or a public network integrated non-public network (public network integrated non-public network, PNI-NPN), through an onboarding network (onboarding network, ON), to obtain a service provided by the non-public network. For example, an identifier of a provisioning server (provisioning server, PVS) is configured for the ON by default, so that the terminal device can obtain a credential (credential) of the NPN from the PVS based on the identifier, thereby accessing the NPN.

However, if the identifier of the PVS that is configured by default is not an identifier needed by the terminal device, the terminal device cannot access a PVS that the terminal device needs to access, and cannot access the NPN that the terminal device wants to access. Consequently, access reliability is poor, and user experience is affected.

### SUMMARY

Embodiments of this application provide a communication method and apparatus, thereby resolving a problem that a terminal device cannot access an NPN that the terminal device wants to access, to obtain a corresponding network service, and improve user experience.

To achieve the foregoing objective, the following technical solutions are used in this application.

According to a first aspect, a communication method is provided. The communication method is applied to a first network element. The communication method includes: receiving first network information of a terminal device, and sending a first identifier of a first provisioning server PVS to the terminal device, where the first network information includes network information of a first non-public network NPN and/or network information corresponding to the first PVS, and the first identifier corresponds to the first network information.

It can be learned from the method according to the first aspect that, because the first network element has a first correspondence between the identifier of the first PVS and the first network information, the first network element may send the corresponding first identifier to the terminal device based on the first network information of the terminal device and the first correspondence, that is, send the first identifier needed by the terminal device to the terminal device, so that the terminal device can access the first NPN that the terminal device wants to access, to obtain a corresponding network service, and improve user experience.

In a possible design solution, the network information of the first NPN may include one or more of the following: first network slice selection assistance information NSSAI, a first data network name DNN, an identifier of a subscription owner standalone non-public network SO-SNPN, or a group identifier of the SO-SNPN. Correspondingly, the correspondence may be a correspondence between each of the first NSSAI, the first DNN, the identifier of the SO-SNPN, and the group identifier of the SO-SNPN and a first identifier corresponding to each of the first NSSAI, the first DNN, the identifier of the SO-SNPN, and the group identifier of the SO-SNPN. For example, the first NSSAI corresponds to a first identifier A, the first DNN corresponds to a first identifier B, and the first identifier A is different from the first identifier B. In this way, if the first NSSAI, the first DNN, the identifier of the SO-SNPN, and the group identifier of the SO-SNPN may respectively correspond to different types of first NPNs, the first network element may also determine the corresponding first identifier based on the correspondence, to ensure that the terminal device can successfully access the first NPN of a corresponding type, so that access reliability is improved.

In another possible design solution, the network information corresponding to the first PVS may include one or more of the following: second NSSAI or a second DNN. Correspondingly, the correspondence may be a correspondence between each of the second NSSAI and the second DNN and the first identifier. For example, the second NSSAI corresponds to a first identifier C, the second DNN corresponds to a first identifier D, and the first identifier C is different from the first identifier D. In this way, if the second NSSAI and the second DNN may respectively correspond to different types of first NPNs, the first network element may also determine the corresponding first identifier based on the correspondence, to ensure that the terminal device can successfully access the first NPN of a corresponding type, so that access reliability of the terminal device is improved.

In a possible design solution, the first network element may be an access management network element, and the first network information may be carried in one or more of the following: an N2 message, a registration request message, or a packet data unit PDU session establishment request message. The one or more messages received by the access management network element may be messages in different procedures, for example, messages in a registration procedure and a session establishment procedure. In other words, the access management network element may receive the first network information not only in the registration procedure, but also in the session establishment procedure, to avoid a case in which the terminal device cannot quickly access the first NPN because the access management network element does not receive the first network information in time, so that access efficiency can be improved.

In a possible design solution, the first network element may be an access management network element, and the first identifier may be carried in one or more of the following: an N2 message, a registration accept message, a PDU session establishment accept message, or a non-access stratum mobility management transport message. The one or more messages sent by the access management network element may be messages in different procedures, for example, messages in a registration procedure and a session establishment procedure. In other words, the access management network element may send the first identifier not only in the registration procedure, but also in the session establishment procedure, to avoid a case in which the terminal device cannot access the first NPN in time because the access management network element does not send the first identifier in time, so that access efficiency can be improved.

In a possible design solution, the first network element may be a session management network element. The receiving first network information of a terminal device may include: receiving the network information of the first NPN or the network information corresponding to the first PVS from an access management network element.

Optionally, when the network information corresponding to the first PVS is received from the access management network element, the network information corresponding to the first PVS is obtained by the access management network element based on the network information of the first NPN from the terminal device, where a second correspondence between the network information of the first NPN and the network information corresponding to the first PVS is configured for the access management network element.

It should be understood that, because the second correspondence is configured for the access management network element, the access management network element may send, to the session management network element based on the second correspondence, information that can be identified by the session management network element. For example, if the session management network element can identify the network information corresponding to the first PVS, the access management network element may send the network information corresponding to the first PVS. Alternatively, if the session management network element can identify the network information of the first NPN, the access management network element may send the network information of the first NPN. In this way, it can be avoided that the terminal device cannot access the first NPN because the access management network element does not correctly identify the network information, to improve an access success rate and reliability. In addition, only a correspondence between the information that can be identified and the first identifier, for example, only the first correspondence between the network information corresponding to the first PVS and the first identifier, may be configured for the session management network element. In this way, storage space of the session management network element can be saved, and a resource configuration can be optimized, to improve running efficiency.

In a possible design solution, the first network element may be a session management network element, and the first network information may be carried in one or more of the following: a PDU session establishment request message or a create session management context request message. The one or more messages received by the session management network element may be messages in different procedures, for example, messages in a registration procedure and a session establishment procedure. In other words, the session management network element may receive the first network information not only in the registration procedure, but also in the session establishment procedure, to avoid a case in which the terminal device cannot quickly access the first NPN because the session management network element does not receive the first network information in time, so that access efficiency can be improved.

In a possible design solution, the first network element may be a session management network element, and the first identifier may be carried in one or more of the following: a create session management context response message, an N1N2 message, N2 session management information, N1 session management information, a PDU session establishment accept message, or a protocol configuration option PCO. The one or more messages sent by the session management network element may be messages in different procedures, for example, messages in a registration procedure and a session establishment procedure. In other words, the session management network element may send the first identifier not only in the registration procedure, but also in the session establishment procedure, to avoid a case in which the terminal device cannot quickly access the first NPN because the session management network element does not send the first identifier in time, so that access efficiency can be improved.

In a possible design solution, after the receiving first network information of a terminal device, and before the sending a first identifier of the first PVS to the terminal device, the method according to the first aspect may further include: sending a first authentication request message, and receiving a first authentication response message, where the first authentication request message may request to perform authentication on the terminal device, and the first authentication response message may indicate that the authentication on the terminal device fails.

Optionally, the sending a first identifier of the first PVS to the terminal device includes: determining, based on the first authentication response message, that the authentication on the terminal device fails, and sending the first identifier of the first PVS to the terminal device.

It should be understood that a reason for the authentication failure is usually that the terminal device does not have a credential of the first NPN. Otherwise, it indicates that the terminal device has had the credential. In other words, whether the authentication fails is determined, so that the first network element can send the corresponding first identifier to the terminal device only when the terminal device does not have the credential, to avoid a waste of a communication resource, improve communication efficiency, and be compatible with an existing authentication procedure.

Optionally, the first authentication response message carries the first identifier. In this way, the first authentication response message is reused to send the first identifier, so that signaling utilization can be improved, to improve communication efficiency.

In a possible design solution, the first network element has a first correspondence between the first identifier and the first network information. It should be understood that, because the first correspondence may be in the first network element locally, the first identifier may be determined more quickly, to improve access efficiency of the terminal device.

In another possible design solution, the first correspondence may be obtained by the first network element from an application server and/or a default credentials server. In other words, the first network element may obtain the first correspondence from the application server and/or the default credentials server only when necessary, and does not need to store the first correspondence at any time. In this way, storage space of the first network element can be saved, a resource configuration can be optimized, and running efficiency can be improved.

According to a second aspect, a communication method is provided. The communication method is applied to an authentication server. The communication method includes: receiving a second authentication request message, and sending a second authentication response message, where the second authentication request message requests to perform authentication on a terminal device, the second authentication response message indicates that the authentication on the terminal device fails, and the second authentication response message carries a first identifier of a first PVS.

In addition, for a technical effect of the communication method according to the second aspect, refer to the technical effect of the communication method according to the first aspect. Details are not described herein again.

According to a third aspect, a communication method is provided. The communication method is applied to a terminal device. The communication method includes: sending first network information to a first network element, and receiving a first identifier of a first PVS from the first network element, where the first network information includes network information of a first NPN and/or network information corresponding to the first PVS, and the first identifier corresponds to the first network information.

In a possible design solution, the first network information is obtained by the terminal device from an access management network element.

In a possible design solution, after the receiving a first identifier of the first PVS from the first network element, the method according to the third aspect may further include: obtaining a credential of the first NPN from the first PVS based on the first identifier, and accessing the first NPN based on the credential of the first NPN.

Optionally, the network information of the first NPN may include one or more of the following: first NSSAI, a first DNN, an identifier of an SO-SNPN, or a group identifier of the SO-SNPN.

Optionally, the network information corresponding to the first PVS may include one or more of the following: second NSSAI or a second DNN.

In a possible design solution, the first network element may be an access management network element, and the first network information may be carried in one or more of the following: an N2 message, a registration request message, or a PDU session establishment request message.

In a possible design solution, the first network element may be an access management network element, and the first identifier may be carried in one or more of the following: an N2 message, a registration accept message, a PDU session establishment accept message, or a non-access stratum mobility management transport message.

In a possible design solution, the first network element may be a session management network element, and the first network information may be carried in one or more of the following: a PDU session establishment request message or a create session management context request message.

In a possible design solution, the first network element may be a session management network element, and the first identifier may be carried in one or more of the following: a create session management context response message, an N1N2 message, N2 session management information, N1 session management information, a PDU session establishment accept message, or a PCO.

In addition, for a technical effect of the communication method according to the third aspect, refer to the technical effect of the communication method according to the first aspect. Details are not described herein again.

According to a fourth aspect, a communication method is provided. The communication method is applied to a first network element. The communication method includes: obtaining a correspondence, and sending the correspondence to a terminal device, where the correspondence is a correspondence between an identifier of a PVS and network information, and the network information includes network information of an NPN and/or network information corresponding to the PVS.

With reference to communication methods according to the fourth aspect and a fifth aspect, it can be learned that, because the first network element may send the correspondence between the identifier of the PVS and the network information to the terminal device, the terminal device may determine a corresponding first identifier based on the correspondence, so that the terminal device accesses a first NPN that the terminal device wants to access, and obtains a corresponding network service, to improve user experience.

In a possible design solution, the obtaining a correspondence may include: obtaining the correspondence from a unified data management network element. In other words, the first network element may obtain the correspondence from the unified data management network element only when necessary, and does not need to store the correspondence at any time. In this way, storage space of the first network element can be saved, a resource configuration can be optimized, and running efficiency can be improved.

Optionally, the obtaining the correspondence from a unified data management network element may include: obtaining the correspondence from the unified data management network element by using a first request service. Certainly, the first network element may alternatively obtain the correspondence in another manner, for example, by using a subscription service.

In a possible design solution, the correspondence may include a first correspondence, the first correspondence may be a correspondence between first network information and a first identifier, the first network information may include network information of a first NPN and/or network information corresponding to a first PVS, and the first identifier is an identifier of the first PVS.

Optionally, the network information of the first NPN may include one or more of the following: first NSSAI, a first DNN, an identifier of an SO-SNPN, or a group identifier of the SO-SNPN.

Optionally, the network information corresponding to the first PVS may include one or more of the following: second NSSAI or a second DNN.

In a possible design solution, the first network element may be an access management network element, and the correspondence may be carried in one or more of the following: an N2 message, a registration accept message, a PDU session establishment accept message, or a non-access stratum mobility management transport message.

In a possible design solution, the first network element may be a session management network element, and the correspondence may be carried in one or more of the following: a create session management context response message, an N1N2 message, a PDU session establishment accept message, or a PCO.

In addition, for a technical effect of the communication method according to the fourth aspect, refer to the technical effect of the communication method according to the first aspect. Details are not described herein again.

According to a fifth aspect, a communication method is provided. The communication method is applied to a terminal device. The communication method includes: receiving a correspondence from a first network element, and determining a first PVS based on the correspondence, to obtain a credential of a first NPN from the first PVS, where the correspondence is a correspondence between an identifier of a PVS and network information, and the network information includes network information of an NPN and/or network information corresponding to the PVS.

In a possible design solution, the determining a first PVS based on the correspondence may include: determining a first identifier of the first PVS based on the correspondence, where the correspondence includes a correspondence between first network information and the first identifier of the first PVS. In addition, the obtaining a credential of a first NPN from the first PVS may include: obtaining the credential of the first NPN from the first PVS based on the first identifier of the first PVS.

Optionally, the first network information may include network information of the first NPN and/or network information corresponding to the first PVS.

Further, the network information of the first NPN may include one or more of the following: first NSSAI, a first DNN, an identifier of an SO-SNPN, or a group identifier of the SO-SNPN.

Further, the network information corresponding to the first PVS may include one or more of the following: second NSSAI or a second DNN.

In a possible design solution, the first network element may be an access management network element, and the correspondence may be carried in one or more of the following: an N2 message, a registration accept message, a PDU session establishment accept message, or a non-access stratum mobility management transport message.

In a possible design solution, the first network element may be a session management network element, and the correspondence may be carried in one or more of the following: a create session management context response message, an N1N2 message, a PDU session establishment accept message, or a PCO.

In addition, for a technical effect of the communication method according to the fifth aspect, refer to the technical effect of the communication method according to the first aspect. Details are not described herein again.

According to a sixth aspect, a communication method is provided. The communication method is applied to a unified data management network element. The communication method includes: receiving a first request message from a first network element, and sending a first response message to the first network element, where the first request message requests a correspondence, the correspondence is a correspondence between an identifier of a PVS and network information, the network information includes: network information of an NPN and/or network information corresponding to the PVS, and the first response message carries the correspondence.

In a possible design solution, the receiving a first request message from a first network element may include: receiving the first request message from the first network element by using a first request service.

In a possible design solution, the sending a first response message to the first network element may include: sending the first response message to the first network element by using a first request service.

In addition, for a technical effect of the communication method according to the sixth aspect, refer to the technical effect of the communication method according to the first aspect. Details are not described herein again.

According to a seventh aspect, a communication apparatus is provided. The communication apparatus includes a receiving module and a sending module. The receiving module is configured to receive first network information of a terminal device. The sending module is configured to send a first identifier of a first provisioning server PVS to the terminal device. The first network information includes network information of a first non-public network NPN and/or network information corresponding to the first PVS, and the first identifier corresponds to the first network information.

In a possible design solution, the network information of the first NPN may include one or more of the following: first network slice selection assistance information NSSAI, a first data network name DNN, an identifier of a subscription owner standalone non-public network SO-SNPN, or a group identifier of the SO-SNPN.

In another possible design solution, the network information corresponding to the first PVS may include one or more of the following: second NSSAI or a second DNN.

In a possible design solution, the communication apparatus may be an access management network element, and the first network information may be carried in one or more of the following: an N2 message, a registration request message, or a packet data unit PDU session establishment request message.

In a possible design solution, the communication apparatus may be the access management network element, and the first identifier may be carried in one or more of the following: an N2 message, a registration accept message, a PDU session establishment accept message, or a non-access stratum mobility management transport message.

In a possible design solution, the communication apparatus may be a session management network element. The receiving module may be further configured to receive the network information of the first NPN or the network information corresponding to the first PVS from an access management network element.

Optionally, when the network information corresponding to the first PVS is received from the access management network element, the network information corresponding to the first PVS is obtained by the access management network element based on the network information of the first NPN from the terminal device, where a second correspondence between the network information of the first NPN and the network information corresponding to the first PVS is configured for the access management network element.

In a possible design solution, the communication apparatus may be the session management network element, and the first network information may be carried in one or more of the following: a PDU session establishment request message or a create session management context request message.

In a possible design solution, the communication apparatus may be the session management network element, and the first identifier may be carried in one or more of the following: a create session management context response message, an N1N2 message, N2 session management information, N1 session management information, a PDU session establishment accept message, or a protocol configuration option PCO.

In a possible design solution, after the receiving module receives the first network information of the terminal device, and before the sending module sends the first identifier of the first PVS to the terminal device, the sending module may be further configured to send a first authentication request message, and the receiving module may be further configured to receive a first authentication response message, where the first authentication request message may request to perform authentication on the terminal device, and the first authentication response message may indicate that the authentication on the terminal device fails.

Optionally, the communication apparatus according to the seventh aspect may further include a processing module. The processing module may be configured to determine, based on the first authentication response message, that the authentication on the terminal device fails, and control the sending module to send the first identifier of the first PVS to the terminal device.

Optionally, the first authentication response message carries the first identifier

In a possible design solution, the communication apparatus has a first correspondence between the first identifier and the first network information.

In another possible design solution, the first correspondence may be obtained by the communication apparatus from an application server and/or a default credentials server.

Optionally, the sending module and the receiving module may be integrated into one module, for example, a transceiver module. The transceiver module is configured to implement a sending function and a receiving function of the communication apparatus.

Optionally, the communication apparatus according to the seventh aspect may further include a storage module. The storage module stores a program or instructions. When the processing module executes the program or the instructions, the communication apparatus can perform the communication method according to the first aspect.

It should be noted that, the communication apparatus according to the seventh aspect may be a network device, a chip (system) or another part or component that may be disposed in the network device, or an apparatus that includes the network device. This is not limited in this application.

In addition, for a technical effect of the communication apparatus according to the seventh aspect, refer to the technical effect of the communication method according to the first aspect. Details are not described herein again.

According to an eighth aspect, a communication apparatus is provided. The communication apparatus includes a receiving module and a sending module. The receiving module is configured to receive a second authentication request message. The sending module is configured to send a second authentication response message. The second authentication request message requests to perform authentication on a terminal device, the second authentication response message indicates that the authentication on the terminal device fails, and the second authentication response message carries a first identifier of a first PVS.

Optionally, the sending module and the receiving module may be integrated into one module, for example, a transceiver module. The transceiver module is configured to implement a sending function and a receiving function of the communication apparatus.

Optionally, the communication apparatus according to the eighth aspect may further include a processing module. The processing module is configured to implement a processing function of the communication apparatus.

Optionally, the communication apparatus according to the eighth aspect may further include a storage module. The storage module stores a program or instructions. When the processing module executes the program or the instructions, the communication apparatus can perform the communication method according to the second aspect.

It should be noted that, the communication apparatus according to the eighth aspect may be a network device, a chip (system) or another part or component that may be disposed in the network device, or an apparatus that includes the network device. This is not limited in this application.

In addition, for a technical effect of the communication apparatus according to the eighth aspect, refer to the technical effect of the communication method according to the second aspect. Details are not described herein again.

According to a ninth aspect, a communication apparatus is provided. The communication apparatus includes a receiving module and a sending module. The sending module is configured to send first network information to a first network element. The receiving module is configured to receive a first identifier of a first PVS from the first network element. The first network information includes network information of a first NPN and/or network information corresponding to the first PVS, and the first identifier corresponds to the first network information.

In a possible design solution, the first network information is obtained by the communication apparatus according to the ninth aspect from an access management network element.

In a possible design solution, the communication apparatus according to the ninth aspect may further include a processing module. After the receiving module receives the first identifier of the first PVS from the first network element, the processing module may be configured to obtain a credential of the first NPN from the first PVS based on the first identifier, and access the first NPN based on the credential of the first NPN.

Optionally, the network information of the first NPN may include one or more of the following: first NSSAI, a first DNN, an identifier of an SO-SNPN, or a group identifier of the SO-SNPN.

Optionally, the network information corresponding to the first PVS may include one or more of the following: second NSSAI or a second DNN.

In a possible design solution, the first network element may be an access management network element, and the first network information may be carried in one or more of the following: an N2 message, a registration request message, or a PDU session establishment request message.

In a possible design solution, the first network element may be an access management network element, and the first identifier may be carried in one or more of the following: an N2 message, a registration accept message, a PDU session establishment accept message, or a non-access stratum mobility management transport message.

In a possible design solution, the first network element may be a session management network element, and the first network information may be carried in one or more of the following: a PDU session establishment request message or a create session management context request message.

In a possible design solution, the first network element may be a session management network element, and the first identifier may be carried in one or more of the following: a create session management context response message, an N1N2 message, N2 session management information, N1 session management information, a PDU session establishment accept message, or a PCO.

Optionally, the sending module and the receiving module may be integrated into one module, for example, a transceiver module. The transceiver module is configured to implement a sending function and a receiving function of the communication apparatus.

Optionally, the communication apparatus in the ninth aspect may further include a storage module. The storage module stores a program or instructions. When the processing module executes the program or the instructions, the communication apparatus can perform the communication method according to the third aspect.

It should be noted that, the communication apparatus according to the ninth aspect may be a terminal device, a chip (system) or another part or component that may be disposed in the terminal device, or an apparatus that includes the terminal device. This is not limited in this application.

In addition, for a technical effect of the communication apparatus according to the ninth aspect, refer to the technical effect of the communication method according to the third aspect. Details are not described herein again.

According to a tenth aspect, a communication apparatus is provided. The communication apparatus includes a processing module and a transceiver module. The processing module is configured to obtain the correspondence. The transceiver module is configured to send the correspondence to a terminal device. The correspondence is a correspondence between an identifier of a PVS and network information, and the network information includes network information of an NPN and/or network information corresponding to the PVS.

In a possible design solution, the processing module may be further configured to control the transceiver module to obtain the correspondence from a unified data management network element.

Optionally, the processing module may be further configured to control, by using a first request service, the transceiver module to obtain the correspondence from the unified data management network element.

In a possible design solution, the correspondence may include a first correspondence, the first correspondence may be a correspondence between first network information and a first identifier, the first network information may include network information of a first NPN and/or network information corresponding to a first PVS, and the first identifier is an identifier of the first PVS.

Optionally, the network information of the first NPN may include one or more of the following: first NSSAI, a first DNN, an identifier of an SO-SNPN, or a group identifier of the SO-SNPN.

Optionally, the network information corresponding to the first PVS may include one or more of the following: second NSSAI or a second DNN.

In a possible design solution, the communication apparatus may be an access management network element, and the correspondence may be carried in one or more of the following: an N2 message, a registration accept message, a PDU session establishment accept message, or a non-access stratum mobility management transport message

In a possible design solution, the communication apparatus may be a session management network element, and the correspondence may be carried in one or more of the following: a create session management context response message, an N1N2 message, a PDU session establishment accept message, or a PCO.

Optionally, the transceiver module may include a receiving module and a sending module. The receiving module is configured to implement a receiving function of the communication apparatus according to the tenth aspect. The sending module is configured to implement a sending function of the communication apparatus according to the tenth aspect.

Optionally, the communication apparatus according to the tenth aspect may further include a storage module. The storage module stores a program or instructions. When the processing module executes the program or the instructions, the communication apparatus can perform the communication method according to the fourth aspect.

It should be noted that, the communication apparatus according to the tenth aspect may be a network device, a chip (system) or another part or component that may be disposed in the network device, or an apparatus that includes the network device. This is not limited in this application.

In addition, for a technical effect of the communication apparatus according to the tenth aspect, refer to the technical effect of the communication method according to the fourth aspect. Details are not described herein again.

According to an eleventh aspect, a communication apparatus is provided. The communication apparatus includes a processing module and a transceiver module. The transceiver module is configured to receive a correspondence from a first network element. The processing module is configured to determine a first PVS based on the correspondence, and control the transceiver module to obtain a credential of a first NPN from the first PVS. The correspondence is a correspondence between an identifier of a PVS and network information, and the network information includes network information of an NPN and/or network information corresponding to the PVS.

In a possible design solution, the processing module is further configured to determine a first identifier of the first PVS based on the correspondence, and control, based on the first identifier of the first PVS, the transceiver module to obtain the credential of the first NPN from the first PVS. The correspondence includes a correspondence between first network information and the first identifier of the first PVS.

Optionally, the first network information may include network information of the first NPN and/or network information corresponding to the first PVS.

Further, the network information of the first NPN may include one or more of the following: first NSSAI, a first DNN, an identifier of an SO-SNPN, or a group identifier of the SO-SNPN.

Further, the network information corresponding to the first PVS may include one or more of the following: second NSSAI or a second DNN.

In a possible design solution, the first network element may be an access management network element, and the correspondence may be carried in one or more of the following: an N2 message, a registration accept message, a PDU session establishment accept message, or a non-access stratum mobility management transport message.

In a possible design solution, the first network element may be a session management network element, and the correspondence may be carried in one or more of the following: a create session management context response message, an N1N2 message, a PDU session establishment accept message, or a PCO.

Optionally, the transceiver module may include a receiving module and a sending module. The receiving module is configured to implement a receiving function of the communication apparatus according to the eleventh aspect. The sending module is configured to implement a sending function of the communication apparatus according to the eleventh aspect.

Optionally, the communication apparatus according to the eleventh aspect may further include a storage module. The storage module stores a program or instructions. When the processing module executes the program or the instructions, the communication apparatus can perform the communication method according to the fifth aspect.

It should be noted that, the communication apparatus according to the eleventh aspect may be a terminal device, a chip (system) or another part or component that may be disposed in the terminal device, or an apparatus that includes the terminal device. This is not limited in this application.

In addition, for a technical effect of the communication apparatus according to the eleventh aspect, refer to the technical effect of the communication method according to the fifth aspect. Details are not described herein again.

According to a twelfth aspect, a communication apparatus is provided. The communication apparatus includes a transceiver module. The transceiver module is configured to receive a first request message from a first network element, and send a first response message to the first network element, where the first request message requests a correspondence, the correspondence is a correspondence between an identifier of a PVS and network information, the network information includes: network information of an NPN and/or network information corresponding to the PVS, and the first response message carries the correspondence.

In a possible design solution, the communication apparatus may further include a processing module. The processing module is configured to control, by using a first request service, the transceiver module to receive the first request message from the first network element.

In a possible design solution, the communication apparatus may further include the processing module. The processing module is configured to control, by using the first request service, the transceiver module to send the first response message to the first network element.

Optionally, the transceiver module may include a receiving module and a sending module. The receiving module is configured to implement a receiving function of the communication apparatus according to the twelfth aspect. The sending module is configured to implement a sending function of the communication apparatus according to the twelfth aspect.

Optionally, the communication apparatus according to the twelfth aspect may further include a storage module. The storage module stores a program or instructions. When the processing module executes the program or the instructions, the communication apparatus can perform the communication method according to the sixth aspect.

It should be noted that, the communication apparatus according to the twelfth aspect may be a network device, a chip (system) or another part or component that may be disposed in the network device, or an apparatus that includes the network device. This is not limited in this application.

In addition, for a technical effect of the communication apparatus according to the twelfth aspect, refer to the technical effect of the communication method according to the sixth aspect. Details are not described herein again.

According to a thirteenth aspect, a communication apparatus is provided. The communication apparatus includes a processor. The processor is coupled to a memory. The processor is configured to execute a computer program stored in the memory, to enable the apparatus to perform the method according to any one of the possible implementations of the first aspect to the sixth aspect.

In a possible design solution, the apparatus according to the thirteenth aspect may further include a transceiver. The transceiver may be a transceiver circuit or an interface circuit. The transceiver may be used by the apparatus according to the thirteenth aspect to communicate with another apparatus.

In this application, the apparatus according to the thirteenth aspect may be a terminal device or a network device, a chip (system) or another part or component that may be disposed in the terminal device or the network device, or an apparatus that includes the terminal device or the network device.

In addition, for a technical effect of the apparatus according to the thirteenth aspect, refer to the technical effect of the method according to any one of the implementations of the first aspect to the sixth aspect. Details are not described herein again.

According to a fourteenth aspect, a communication apparatus is provided. The communication apparatus includes a processor and a memory. The memory is configured to store a computer program. When the processor executes the computer program, the apparatus is enabled to perform the method according to any one of the implementations of the first aspect to the sixth aspect.

In a possible design solution, the apparatus according to the fourteenth aspect may further include a transceiver. The transceiver may be a transceiver circuit or an interface circuit. The transceiver may be used by the apparatus according to the fourteenth aspect to communicate with another apparatus.

In this application, the apparatus according to the fourteenth aspect may be a terminal device or a network device, a chip (system) or another part or component that may be disposed in the terminal device or the network device, or an apparatus that includes the terminal device or the network device.

In addition, for a technical effect of the apparatus according to the fourteenth aspect, refer to the technical effect of the method according to any one of the implementations of the first aspect to the sixth aspect. Details are not described herein again.

According to a fifteenth aspect, a communication apparatus is provided. The communication apparatus includes a processor and an interface circuit. The interface circuit is configured to receive code instructions and transmit the code instructions to the processor. The processor is configured to run the code instructions to perform the method according to any one of the implementations of the first aspect to the sixth aspect.

Optionally, the apparatus according to the fifteenth aspect may further include a receiver and a transmitter. The receiver is configured to implement a receiving function of the apparatus, and the transmitter is configured to implement a sending function of the apparatus. Optionally, the transmitter and the receiver may be integrated into one component, for example, a transceiver. The transceiver is configured to implement a sending function and a receiving function of the apparatus.

Optionally, the apparatus according to the fifteenth aspect may further include a memory. The memory stores a program or instructions. When the processor according to the fifteenth aspect executes the program or the instructions, the apparatus is enabled to perform the method according to any one of the implementations of the first aspect to the sixth aspect.

In this application, the apparatus according to the fifteenth aspect may be a terminal device or a network device, a chip (system) or another part or component that may be disposed in the terminal device or the network device, or an apparatus that includes the terminal device or the network device.

In addition, for a technical effect of the apparatus according to the fifteenth aspect, refer to the technical effect of the method according to any one of the implementations of the first aspect to the sixth aspect. Details are not described herein again.

According to a sixteenth aspect, a communication apparatus is provided. The communication apparatus includes a processor and a transceiver. The transceiver may be a transceiver circuit or an interface circuit. The transceiver is configured to exchange information between the apparatus and another apparatus. The processor executes program instructions to perform the method according to any one of the implementations of the first aspect to the sixth aspect.

Optionally, the apparatus according to the sixteenth aspect may further include a memory. The memory stores a program or instructions. When the processor according to the sixteenth aspect executes the program or the instruction, the apparatus is enabled to perform the method according to any one of the implementations of the first aspect to the sixth aspect.

In this application, the apparatus according to the sixteenth aspect may be a terminal device or a network device, a chip (system) or another part or component that may be disposed in the terminal device or the network device, or an apparatus that includes the terminal device or the network device.

In addition, for a technical effect of the apparatus according to the sixteenth aspect, refer to the technical effect of the method according to any one of the implementations of the first aspect to the sixth aspect. Details are not described herein again.

According to a seventeenth aspect, a communication system is provided. The communication system includes one or more network devices. Optionally, the communication system may further include one or more terminal devices. The terminal device or the network device is configured to perform the method according to any one of the implementations of the first aspect to the sixth aspect.

According to an eighteenth aspect, a computer-readable storage medium is provided, and includes a computer program or instructions. When the computer program or the instructions are run on a computer, the computer is enabled to perform the method according to any one of the possible implementations of the first aspect to the sixth aspect.

According to a nineteenth aspect, a computer program product is provided, and includes a computer program or instructions. When the computer program or the instructions are run on a computer, the computer is enabled to perform the method according to any one of the possible implementations of the first aspect to the sixth aspect.

### BRIEF DESCRIPTION OF DRAWINGS

FIG. 1 is a schematic diagram of a relationship between an SNPN and a PLMN;
FIG. 2 is a schematic diagram of an architecture of an SNPN;
FIG. 3 is a schematic flowchart of a method for accessing an SNPN;
FIG. 4 is a schematic flowchart of a method for accessing a PNI-NPN;
FIG. 5 is a schematic diagram of an architecture of a 5G system according to an embodiment of this application;
FIG. 6 is a schematic diagram of an architecture of a communication system according to an embodiment of this application;
FIG. 7 is a schematic flowchart 1 of a communication method according to an embodiment of this application;
FIG. 8 is a schematic flowchart 2 of a communication method according to an embodiment of this application;
FIG. 9 is a schematic flowchart 3 of a communication method according to an embodiment of this application;
FIG. 10 is a schematic flowchart 4 of a communication method according to an embodiment of this application;
FIG. 11 is a schematic flowchart 5 of a communication method according to an embodiment of this application;
FIG. 12 is a schematic flowchart 6 of a communication method according to an embodiment of this application;
FIG. 13 is a schematic flowchart 7 of a communication method according to an embodiment of this application;
FIG. 14 is a schematic flowchart 8 of a communication method according to an embodiment of this application;
FIG. 15 is a schematic flowchart 9 of a communication method according to an embodiment of this application;
FIG. 16 is a schematic flowchart 10 of a communication method according to an embodiment of this application;
FIG. 17 is a schematic flowchart 11 of a communication method according to an embodiment of this application;
FIG. 18 is a schematic diagram 1 of a structure of a communication apparatus according to an embodiment of this application;
FIG. 19 is a schematic diagram 2 of a structure of a communication apparatus according to an embodiment of this application; and
FIG. 20 is a schematic diagram 3 of a structure of a communication apparatus according to an embodiment of this application.

### DESCRIPTION OF EMBODIMENTS

Technical terms in this application are first described.

### 1. SNPN

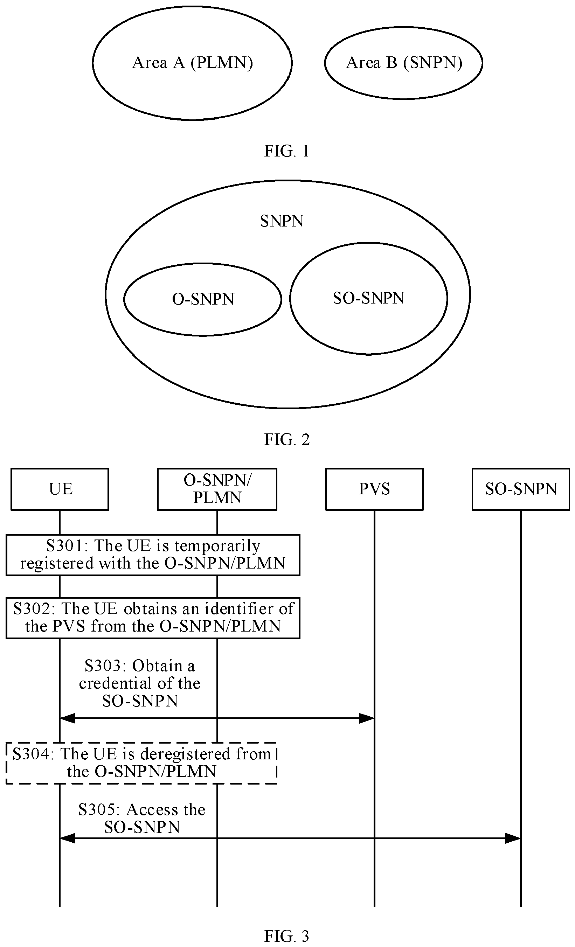

The SNPN may be a network that does not interwork with a public network, for example, a public land mobile network (Public land mobile network, PLMN), and may usually be an internal network of some enterprises, campuses, and factories. For example, as shown in FIG. 1, if the PLMN is compared to an area, for example, an area A, the SNPN may be compared to another area, for example, an area B. The two areas are independent of each other, and do not overlap each other. In other words, the SNPN and the PLMN are independent of each other, and a terminal device cannot directly access the SNPN from the PLMN.

Further, FIG. 2 is a schematic diagram of an architecture of the SNPN. As shown in FIG. 2, the SNPN may include: an onboarding standalone non-public network (onboarding standalone non-public network, O-SNPN) and a subscription owner standalone non-public network (subscription owner standalone non-public network, SO-SNPN). The O-SNPN may be for providing a temporary channel for the terminal device that wants to access the SNPN, so that the terminal device can obtain, from the O-SNPN, a credential needed for accessing the SNPN, and access the SNPN based on the credential, for example, access the SO-SNPN. Details are described below.

FIG. 3 is a flowchart of a method for accessing the SNPN by the terminal device, for example, user equipment (user equipment, UE). Specifically, as shown in FIG. 3, a procedure of the method for accessing the SNPN by the UE mainly includes the following steps.

S301: The UE is temporarily registered with the O-SNPN/PLMN.

S302: The UE obtains an identifier of a PVS from the O-SNPN/PLMN.

A session, for example, a protocol data unit (protocol data unit, PDU) session, may be established between the UE and the O-SNPN/PLMN. In this way, the O-SNPN/PLMN may send the preconfigured identifier of the PVS to the UE by using the PDU session. The PVS may be configured to provide a service for access of the UE to the SO-SNPN, and the identifier may be an address (address), for example, an internet protocol (internet protocol, IP) address, of the PVS.

S303: The UE obtains a credential of the SO-SNPN from the PVS.

The UE may correspondingly access the PVS based on the identifier of the PVS, to obtain the credential of the SO-SNPN from the PVS.

S304: The UE is deregistered from the O-SNPN/PLMN.

S304 is an optional step. For example, if the UE still has a service in the O-SNPN/PLMN, the UE may not be deregistered from the O-SNPN/PLMN.

S305: The UE accesses the SO-SNPN.

The UE may complete registration in the SO-SNPN by using the credential of the SO-SNPN, to access the SO-SNPN and obtain a service of the SO-SNPN.

It can be learned that, the UE may obtain, from the O-SNPN/PLMN through the temporary registration, the identifier of the PVS that is configured by default, thereby obtaining the credential of the SO-SNPN based on the identifier, to access the SO-SNPN. In other words, the UE may first access a network, to obtain a credential of another network, and then access the another network based on the credential. However, a problem lies in that, if the identifier of the PVS that is configured by default is not an identifier needed by the UE, the UE cannot access a PVS that the UE needs to access, and therefore cannot access the SO-SNPN that the UE wants to access. Consequently, access reliability is poor.

### 2 PNI-NPN

The PNI-NPN may be an NPN implemented through a PLMN.

For example, in a possible implementation, the PNI-NPN may be represented as a network that provides a network slice (network slice) through the PLMN. A terminal device accesses the network slice to obtain a service provided by the non-public network PNI-NPN.

For another example, in another possible implementation, the PNI-NPN may be represented as a network that provides access to a specific data network (data network, DN) through the PLMN. A terminal device accesses the specific data network through the PLMN to obtain a service provided by the non-public network PNI-NPN.

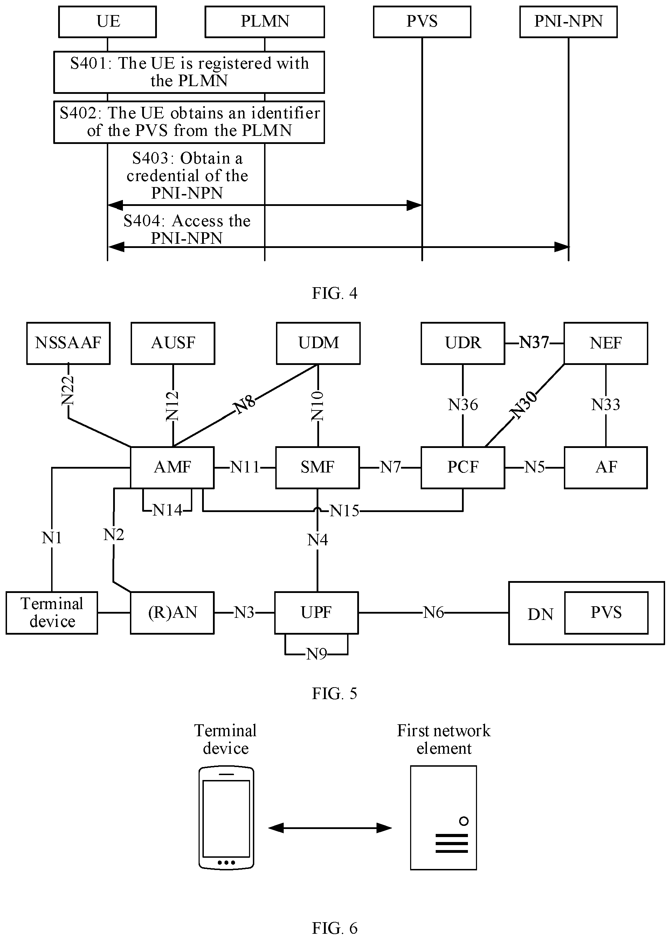

Specifically, FIG. 4 is a flowchart of accessing the PNI-NPN by UE through the PLMN. As shown in FIG. 4, a procedure in which the UE accesses the PNI-NPN through the PLMN mainly includes the following steps.

S401: The UE is registered with the PLMN.

S402: The UE obtains an identifier of a PVS from the PLMN.

A session, for example, a PDU session, may be established between the UE and the PLMN. In this way, a core network element may send the preconfigured identifier of the PVS to the UE by using the PDU session. The PVS may be configured to provide a service for access to the PNI-NPN, and the identifier may also be an address of the PVS.

S403: The UE obtains a credential of the PNI-NPN from the PVS.

The UE may correspondingly access the PVS based on the identifier of the PVS, to obtain the credential of the PNI-NPN from the PVS. If the PNI-NPN is an independent network slice, the credential of the PNI-NPN may be for slice authentication. If the PNI-NPN is a DN, the credential of the PNI-NPN may be for reauthentication.

S404: The UE accesses the PNI-NPN.

The UE may perform a corresponding authentication procedure based on the credential of the PNI-NPN, for example, perform slice authentication or reauthentication, to access the PNI-NPN and obtain the service of the PNI-NPN.

It can be learned that, the UE may be registered with the PLMN, and obtain, from the PLMN, the identifier of the PVS that is configured by default, thereby obtaining the credential of the PNI-NPN based on the identifier, to access the PNI-NPN. However, a problem also lies in that, if the identifier of the PVS that is configured by default is not an identifier needed by the UE, the UE cannot access a PVS that the UE needs to access, and cannot access the PNI-NPN that the UE wants to access. Consequently, access reliability is poor.

In conclusion, regardless of access to the SO-SNPN or the PNI-NPN, the UE cannot access, provided that the UE cannot obtain the needed identifier of the PVS, the SO-SNPN or the PNI-NPN that the UE wants to access, and therefore cannot obtain the corresponding network service. Consequently, user experience is affected.

The following describes technical solutions in this application with reference to accompanying drawings.

The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system such as a long term evolution (long term evolution, LTE) system, a worldwide interoperability for microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of the solutions may be further used.

In addition, in embodiments of this application, terms such as "example" and "for example" are for representing giving an example, an illustration, or a description. Any embodiment or design scheme described as an "example" in this application should not be explained as being more preferred or having more advantages than another embodiment or design scheme. Exactly, the term "example" is used to present a concept in a specific manner. In addition, in embodiments of this application, "and/or" may represent both or either of the two.

In embodiments of this application, terms "information (information)", "signal (signal)", "message (message)", "channel (channel)", and "signaling (signaling)" may sometimes be interchangeably used. It should be noted that meanings expressed by the terms are consistent when differences between the terms are not emphasized. "Of (of)", "corresponding, relevant (corresponding, relevant)", and "corresponding (corresponding)" may sometimes be interchangeably used. It should be noted that meanings expressed by the terms are consistent when differences between the terms are not emphasized.

In embodiments of this application, sometimes a subscript such as W₁ may be written in an incorrect form such as W1. Expressed meanings are consistent when differences are not emphasized.

A network architecture and a service scenario that are described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of a new service scenario, the technical solutions provided in embodiments of this application are also applicable to similar technical problems.

For ease of understanding embodiments of this application, a communication system shown in FIG. 5 is first used as an example to describe in detail a communication system to which embodiments of this application are applicable.

For example, FIG. 5 is a schematic diagram of an architecture of a 5G communication system to which a communication method is applicable according to an embodiment of this application. The 5G communication system may include two parts: an access network (access network, AN) and a core network (core network, CN).

Both the AN and the CN belong to the foregoing PLMN. The AN is mainly for implementing a function related to radio access, and may include a radio access network ((radio) access network, (R)AN) network element. The CN may mainly include the following network elements: a user plane network element, a data network network element, an access management network element, a session management network element, a policy control network element, an authentication server, a data management network element, an application network element, a network capability exposure network element, and a network slice function network element.

The (R)AN network element is configured to provide a network access function for an authorized terminal device in a specific area, and can use transmission tunnels of different quality based on a level of the terminal device, a service requirement, and the like. The (R)AN network element can manage a radio resource, and provide an access service for the terminal device, to forward a control signal and data of the terminal device between the terminal device and a core network. The (R)AN network element may alternatively be understood as a base station in a conventional network.

The user plane network element is configured to perform packet routing and forwarding, quality of service (quality of service, QoS) processing of user plane data, and the like. In the 5G communication system, the user plane network element may be a user plane function (user plane function, UPF) network element. In a future communication system, the user plane network element may still be the UPF network element, or may have another name. This is not limited in this application.

The data network network element is configured to provide a network for data transmission. In the 5G communication system, the data network network element may be the data network (data network, DN) network element. In the future communication system, the data network network element may still be the DN network element, or may have another name. This is not limited in this application.

The access management network element is mainly for mobility management, access management, and the like, and may be configured to implement functions, for example, lawful interception and access authorization/authentication, other than session management in functions of a mobility management entity (mobility management entity, MME). In the 5G communication system, the access management network element may be an access and mobility management function (access and mobility management function, AMF) network element. In the future communication system, the access management network element may still be the AMF network element, or may have another name. This is not limited in this application.

The session management network element is mainly configured to manage a session, assign and manage an internet protocol (internet protocol, IP) address of a terminal device, select a termination point that can manage a user plane function interface and a policy control and charging function interface, notify downlink data, and the like. In the 5G communication system, the session management network element may be a session management function (session management function, SMF) network element. In the future communication system, the session management network element may still be the SMF network element, or may have another name. This is not limited in this application.

The policy control network element is configured to guide a unified policy framework of network behavior, and provide policy rule information for a control plane function network element (for example, the AMF network element or the SMF network element), and the like. In a 4G communication system, the policy control network element may be a policy and charging rules function (policy and charging rules function, PCRF) network element. In the 5G communication system, the policy control network element may be a policy control function (policy control function, PCF) network element. In the future communication system, the policy control network element may still be the PCF network element, or may have another name. This is not limited in this application.

The authentication server is configured to perform an authentication service, generate a key to implement bidirectional authentication on the terminal device, and support a unified authentication framework. In the 5G communication system, the authentication server may be an authentication server function (authentication server function, AUSF) network element. In the future communication system, the authentication server function network element may still be the AUSF network element, or may have another name. This is not limited in this application.

The data management network element is configured to process an identifier of the terminal device, perform access authentication, registration, and mobility management, and the like. In the 5G communication system, the data management network element may be a unified data management (unified data management, UDM) network element. In the future communication system, the unified data management may still be the UDM network element, or may have another name. This is not limited in this application.

The application network element is configured to perform application-affected data routing, access a network exposure function network element, interact with a policy framework to perform policy control, and the like. In the 5G communication system, the application network element may be an application function (application function, AF) network element. In the future communication system, the application network element may still be the AF network element, or may have another name. This is not limited in this application.

The network capability exposure network element is mainly configured to connect a network element in the core network to an external application server, and may provide services such as authentication and forwarding when the external application server initiates a service request to the core network. In the 5G communication system, the network capability exposure network element may be a network exposure function (network exposure function, NEF) network element. In the future communication system, the network capability exposure network element may still be the NEF network element, or may have another name. This is not limited in this application.

The network slice function network element mainly provides the authentication service for the terminal device. In the 5G communication system, the network slice function network element may be a network slice-specific authentication and authorization function (network slice-specific authentication and authorization function, NSSAAF) network element. In the future communication system, the network slice function network element may still be the NSSAAF network element, or may have another name. This is not limited in this application.

It may be understood that the foregoing network elements or the functions may be network elements in a hardware device, software functions running on dedicated hardware, or virtualized functions instantiated on a platform (for example, a cloud platform). One or more services may be obtained through division of the network elements or the functions. Further, services that exist independently of network functions may occur. In this application, instances of the functions, instances of services included in the functions, or instances of the services that exist independently of the network functions may all be referred to as service instances.

The (R)AN network element may be a device having a wireless transceiver function or a chip (system) or another part or component of the device, and includes but is not limited to: an access point (access point, AP), for example, a home gateway, a router, a server, a switch, or a network bridge, in a wireless fidelity (wireless fidelity, Wi-Fi) system, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless relay node, a wireless backhaul node, a transmission point (transmission reception point, TRP or transmission point, TP), or the like; may be a gNB or a transmission point (TRP or TP) in the 5G system, for example, a new radio (new radio, NR) system, or one antenna panel or one group of antenna panels (including a plurality of antenna panels) of a base station in the 5G system; or may be a network node, for example, a baseband unit (BBU) or a distributed unit (distributed unit, DU), that a gNB or a transmission point includes, a road side unit (road side unit, RSU) having a base station function, a wired access gateway, or the like.

The terminal device may communicate with the (R)AN network element, or may communicate with the AMF network element through an N1 interface (N1 for short). The RAN network element communicates with the AMF network element through an N2 interface (N2 for short), and communicates with the UPF network element through an N3 interface (N3 for short). The UPF network element communicates with the SMF network element through an N4 interface (N4 for short), communicates with the UPF network element through an N9 interface (N9 for short), communicates with a PVS in a DN through an N6 interface (N6 for short), and communicates with the NSSAAF network element through an N22 interface (N22 for short). The AMF network element communicates with the UDM network element through an N8 interface (N8 for short), communicates with the SMF network element through an N11 interface (N11 for short), communicates with the AUSF network element through an N12 interface (N12 for short), communicates with the AMF network element through an N14 interface (N14 for short), and communicates with the PCF network element through an N15 interface (N15 for short). The PCF network element communicates with the AF network element through an N5 interface (N5 for short), and communicates with the SMF network element through an N7 interface (N7 for short). The SMF network element communicates with the UDM network element through an N10 interface (N10 for short). The UDR network element communicates with the PCF through an N36 interface (N36 for short). The NEF network element communicates with the UDR network element through an N37 interface (N37 for short), and communicates with the PCF network element through an N30 interface (N30 for short).

It should be noted that the foregoing describes the foregoing network elements or the functions by using the 5G core network as an example. In a future communication system, the foregoing network elements or the functions may be replaced with corresponding network elements or functions in the future communication system. This is not limited in this application. In addition, the foregoing network elements or the functions may be the network elements in the hardware device, the software functions running on the dedicated hardware, or the virtualized functions instantiated on the platform (for example, the cloud platform). The one or more services may be obtained through division of the network elements or the functions. Further, the services that exist independently of the network functions may occur. The foregoing network elements may alternatively communicate with each other through a service-oriented interface. In this application, the instances of the functions, the instances of the services included in the functions, or the instances of the services that exist independently of the network functions may all be referred to as the service instances.

FIG. 6 is a diagram of an architecture of a communication system according to an embodiment of this application. As shown in FIG. 6, the communication system may include a terminal device and a first network element.

The first network element may be a network element, for example, the AMF network element or the SMF network element, in the CN in the foregoing 5G communication system. This is not limited herein.

The terminal device is a terminal accessing the foregoing communication system and having a wireless transceiver function, or a chip or a chip system that may be disposed in the terminal. The terminal device may also be referred to as a user apparatus, an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU that has a terminal function, or the like. The terminal device in this application may alternatively be an in-vehicle module, an automobile module, an onboard component, an automotive chip, or an on board unit that is built in a vehicle as one or more components or units. The vehicle may implement communication methods according to this application by using the in-vehicle module, the automobile module, the onboard component, the automotive chip, or the on board unit that is built in the vehicle.

Further, in the communication system in this embodiment of this application, the terminal device may obtain, by using the first network element, a first identifier that the terminal device needs to obtain. For example, in an implementation, the terminal device may send first network information of the terminal device to the first network element, so that the first network element can send a first identifier corresponding to the first network information to the terminal device. For another example, in another implementation, the first network element may alternatively send a first correspondence, for example, a correspondence between the first identifier and first network information, to the terminal device. In this way, the terminal device may access, based on the first identifier, a first PVS that the terminal device needs to access, to access a first NPN that the terminal device wants to access.

It should be noted that the communication methods provided in embodiments of this application are applicable to the first network element and the terminal device that are shown in FIG. 6. For specific implementation, refer to the following method embodiments. Details are not described herein again.

It should be noted that, the solutions in embodiments of this application may alternatively be applied to another communication system, and a corresponding name may alternatively be replaced with a name of a corresponding function in the another communication system. In addition, FIG. 6 is merely a simplified schematic diagram used as an example for ease of understanding. The communication system may further include another network device and/or another terminal device, which are/is not shown in FIG. 6.

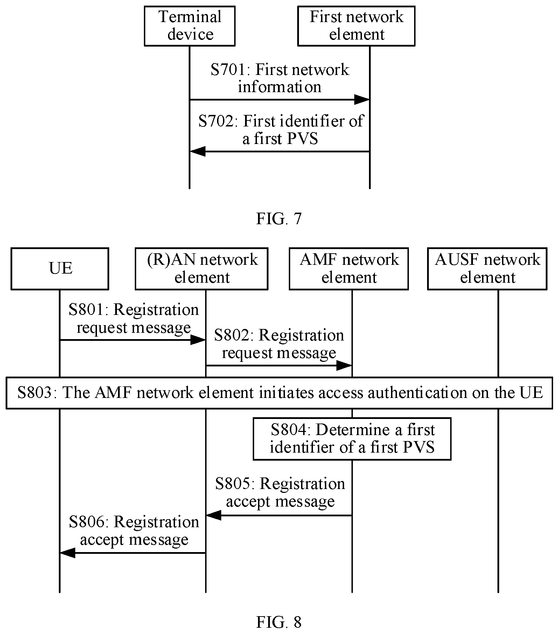

The following specifically describes the communication methods provided in embodiments of this application with reference to FIG. 7 to FIG. 17. For ease of understanding, the following separately provides specific descriptions by using an example in which the first network element sends the first identifier to the terminal device and an example in which the first network element sends the first correspondence to the terminal device.

For example, FIG. 7 is a schematic flowchart 1 of a communication method according to an embodiment of this application. Specifically, FIG. 7 shows a procedure in which a first network element sends a first identifier to a terminal device.

As shown in FIG. 7, the communication method includes the following steps.

S701: The terminal device sends first network information to the first network element, and the first network element receives the first network information of the terminal device.

The first network information may be for obtaining the corresponding first identifier of a first PVS.

The first PVS may be a PVS corresponding to a first NPN that the terminal device wants to access. For example, the first PVS has a credential of the first NPN, so that the terminal device can access the first NPN based on the credential. The first NPN may be any one of the following NPNs: a first network slice, a first DN, or a first SO-SNPN. This is not limited. The first identifier may be an IP address of the first PVS or a domain name (domain name), for example, a fully qualified domain name (fully qualified domain name, FQDN), of the first PVS. This is not limited either

Specifically, the first network information may include network information of the first NPN and/or network information corresponding to the first PVS. In other words, the terminal device may selectively send the network information of the first NPN or the network information corresponding to the first PVS, or may send both the network information of the first NPN and the network information corresponding to the first PVS. This is not limited. In addition, the network information of the first NPN and the network information corresponding to the first PVS are two types of different information, but both may correspond to the first NPN. For example, if the network information of the first NPN is compared to a train C1, the network information corresponding to the first PVS is compared to a train C2, and the first NPN is compared to a destination D1, both the train C1 and the train C2 correspond to the destination D1. For example, both the train C1 and the train C2 are destined for the destination D1. However, the train C1 and the train C2 are two vehicles instead of a same vehicle.

The network information of the first NPN may include one or more of the following: first network slice selection assistance information (network slice selection assistance information, NSSAI), a first data network name (data network name, DNN), an identifier (identity document, ID) of an SO-SNPN, or a group identifier (group ID) of the SO-SNPN. It can be learned that, if the first NPN that the terminal device wants to access is the first network slice, the network information of the first NPN may include the first NSSAI; if the first NPN that the terminal device wants to access is the first DN, the network information of the first NPN may include the first DNN; or if the first NPN that the terminal device wants to access is the SO-SNPN, the network information of the first NPN may include the identifier of the SO-SNPN or the group identifier of the SO-SNPN.

The network information corresponding to the first PVS may include one or more of the following: second NSSAI or a second DNN. It can also be learned that, if the first NPN that the terminal device wants to access is the first network slice, the network information corresponding to the first PVS may include the second NSSAI corresponding to the first PVS; or if the first NPN that the terminal device wants to access is the first DN, the network information of the first PVS may include the first DNN corresponding to the first PVS.

In conclusion, regardless of the network information of the first NPN or the network information corresponding to the first PVS, the terminal device may send network information of a corresponding type based on a type of the first NPN that the terminal device wants to access, so that the terminal device can finally successfully access the first NPN.

It should be understood that the network information of the first NPN and the network information corresponding to the first PVS may include network information of another type in addition to the network information of the corresponding type. This is not limited. For example, if the terminal device wants to access the first network slice, the network information of the first NPN may include not only the first NSSAI, but also the first DNN. For another example, if the terminal device wants to access the first network slice, the network information corresponding to the first PVS may include not only the second NSSAI corresponding to the first PVS, but also the second DNN.

Optionally, the first network information may be preconfigured or predefined in the terminal device locally, or may be obtained by the terminal device from an access management network element, for example, an AMF network element. This is not limited herein.

Further, the first network element may be an access management network element, for example, an AMF network element, or may be a session management network element, for example, an SMF network element. This is not limited.

In some design solutions, if the first network element is the access management network element, the first network information may be carried in one or more of the following: a registration request message (registration request message), a session establishment request message, for example, a PDU session establishment request message (PDU session establishment request message), or an N2 message.

The registration request message may be a message that requests registration in a registration procedure, and a specific name is not limited. For example, when being registered with the access management network element, the terminal device may send, to the access management network element, the registration request message that carries the first network information.

The session establishment request message, for example, the PDU session establishment request message, may be a message that requests to establish a session in a session establishment procedure, for example, a PDU session establishment procedure, and a specific name is not limited. For example, when establishing a PDU session, the terminal device may send, to the access management network element, the PDU session establishment request message that carries the first network information, so that the access management network element can forward the PDU session establishment request message to a session management network element.

It should be noted that both the registration request message and the session establishment request message may be carried in the N2 message. In this way, that the N2 message carries the first network information may be that the N2 message carries the first network information, or may be that the message carried in the N2 message carries the first network information. In addition, in some procedures, for example, a session modification procedure, the first network information may be further carried in a session modification request message, for example, a PDU session modification request message (PDU session modification request message). This is not limited.

In addition, it can be learned from the foregoing descriptions that the one or more messages received by the access management network element may be messages in different procedures, for example, messages in the registration procedure and the session establishment procedure. In other words, the access management network element may receive the first network information not only in the registration procedure, but also in the session establishment procedure, to avoid a case in which the terminal device cannot quickly access the first NPN because the access management network element does not receive the first network information in time, so that access efficiency can be improved.

In some other design solutions, if the first network element is the session management network element, the first network information may be carried in one or more of the following: a session establishment request message, for example, a PDU session establishment request message, or a create session management context request message, for example, a Nsmf_PDU session_create SM context request message.

The session establishment request message and the create session management context request message each may be a message that requests to establish a session in a session establishment procedure, for example, a PDU session establishment procedure, and specific names are not limited. However, a difference lies in that the session establishment request message may be a message sent by the terminal device to the access management network element when the terminal device establishes a session, and the create session management context request message may be a message sent by the access management network element to the session management network element. In other words, after receiving the session establishment request message, for example, the PDU session establishment request message, from the terminal device, the access management network element may carry the PDU session establishment request message in the create session management context request message, and then send the create session management context request message to the session management network element.

It should be noted that, because the session establishment request message may be carried in the create session management context request message, that the create session management context request message carries the first network information may be that the create session management context request message carries the first network information, or may be that the message carried in the create session management context request message carries the first network information.

It should be understood that, that the registration request message, the session establishment request message, the N2 message, the session establishment request message, and the create session management context request message carry the first network information is merely an example, and constitutes no limitation. For example, the first network information may alternatively be carried in another message or a configuration option in the registration procedure and/or another message or a configuration option in the session establishment procedure, and a specific name is not limited.

In addition, it can be learned from the foregoing descriptions that the one or more messages received by the session management network element may be messages in different procedures, for example, messages in the registration procedure and the session establishment procedure. The session management network element may receive the first network information not only in the registration procedure, but also in the session establishment procedure, to avoid a case in which the terminal device cannot quickly access the first NPN because the session management network element does not receive the first network information in time, so that access efficiency can be improved.

S702: The first network element sends the first identifier of the first PVS to the terminal device, and the terminal device receives the first identifier of the first PVS from the first network element.

The first network element has a first correspondence between the first network information and the first identifier, so that the first network element can determine the corresponding first identifier based on the first network information and the first correspondence, thereby sending the first identifier to the terminal device.

In an implementation, the first correspondence may be in the first network element locally, so that the first network element can determine the first identifier more quickly, to improve access efficiency of the terminal device.

Alternatively, in another implementation, the first correspondence may be obtained by the first network element from a default credentials server (default credentials server, DCS). In other words, the first network element may alternatively obtain the first correspondence from the DCS only when necessary, and does not need to store the first correspondence at any time. In this way, storage space of the first network element can also be saved, a resource configuration can also be optimized, and running efficiency can also be improved.

Specifically, for example, if the first network element is the access management network element, for example, the AMF network element, the DCS may send the first correspondence to the access management network element in the registration procedure, for example, send the first correspondence to the access management network element by using an authentication message. For example, the DCS may directly send the first correspondence to the access management network element, or may send the first correspondence to the access management network element via an intermediate network element, for example, an AUSF network element, an NSSAAF network element, or another interworking (interworking function) network element.

For another example, if the first network element is the session management network element, for example, the SMF network element, the DCS may also send the first correspondence to the access management network element in the registration procedure, for example, send the first correspondence to the access management network element by using an authentication message. For example, the DCS may directly send the first correspondence to the access management network element, or may send the first correspondence to the access management network element via an intermediate network element, for example, an AUSF network element, an NSSAAF network element, or another interworking network element. Then, the access management network element may send the first correspondence to the session management network element in the session establishment procedure, for example, send the first correspondence to the session management network element by using at least one of the following: the create session management context request message, for example, a Nsmf_PDU session_create SM context request message, an N1N2 message, for example, Namf_communication_N1N2 message transfer, or a PDU session update context request message, for example, a Nsmf_PDUSession_UpdateSMContext Request message.

It should be understood that, it can be learned from the related descriptions in S701 that, in the registration procedure, after obtaining the first correspondence, the access management network element may further send the first network information in the first correspondence to the terminal device, for example, send the first network information to the terminal device by using a registration accept message (registration accept message), so that the terminal device obtains the first network information from the access management network element. Alternatively, in another implementation, after obtaining the first correspondence, the access management network element may further send the first network information in the first correspondence to the terminal device by using a user equipment configuration update (UE Configuration Update) procedure or a user equipment parameters update (UE Parameters Update) procedure, so that the terminal device obtains the first network information from the access management network element.

In addition, in another implementation, the first correspondence may alternatively be obtained by the first network element from an application server, for example, an AF network element, or another network element, for example, a UDM network element, a UDR network element, an AUSF network element, or a PCF network element. In other words, the first network element may obtain the first correspondence only when necessary, and does not need to store the first correspondence at any time. In this way, storage space of the first network element can be saved, a resource configuration can be optimized, and running efficiency can be improved.

Specifically, it can be learned from the foregoing descriptions of the first network information that the first network information may include one or more of the first NSSAI, the first DNN, the identifier of the SO-SNPN, and the group identifier of the SO-SNPN, and/or one or more of the second NSSAI and the second DNN. Correspondingly, the first correspondence may be a correspondence between each of the first NSSAI, the first DNN, the identifier of the SO-SNPN, the group identifier of the SO-SNPN, the second NSSAI, and the second DNN and a first identifier corresponding to each of the first NSSAI, the first DNN, the identifier of the SO-SNPN, the group identifier of the SO-SNPN, the second NSSAI, and the second DNN. For example, the first NSSAI corresponds to a first identifier A, the first DNN corresponds to a first identifier B, and the first identifier A is different from the first identifier B. In this way, if the first NSSAI, the first DNN, the identifier of the SO-SNPN, the group identifier of the SO-SNPN, the second NSSAI, and the second DNN may respectively correspond to different types of first NPNs, the first network element may also determine the corresponding first identifier based on the first correspondence, to ensure that the terminal device can successfully access the first NPN of a corresponding type, so that access reliability is improved.

In addition, in a possible implementation, the first network element not only has the first correspondence, but also may have a correspondence between an identifier of another PVS and other network information. In other words, there may be one or more correspondences, and each correspondence may indicate a correspondence between each of identifiers of a plurality of PVSs and one or more pieces of network information. The identifier of the PVS may include an IP address of the PVS and/or a domain name of the PVS, and the network information may include network information of an NPN and/or network information corresponding to the PVS. In this way, the first network element may determine, based on the one or more correspondences, an identifier of a PVS that is needed by each terminal device, so that the terminal device can also access an NPN that the terminal device wants to access.

Further, after determining the first identifier, the first network element may send the first identifier to the terminal device.

In some design solutions, if the first network element is the access management network element, the first identifier may be carried in one or more of the following: the registration accept message, a session establishment accept message, for example, a PDU session establishment accept message (PDU session establishment accept message), or the N2 message.

The registration accept message may be a message that requests registration in the registration procedure, and a specific name is not limited. For example, after receiving the registration request message, the access management network element may send, to the terminal device in response to the registration request message, the registration accept message that carries the first identifier

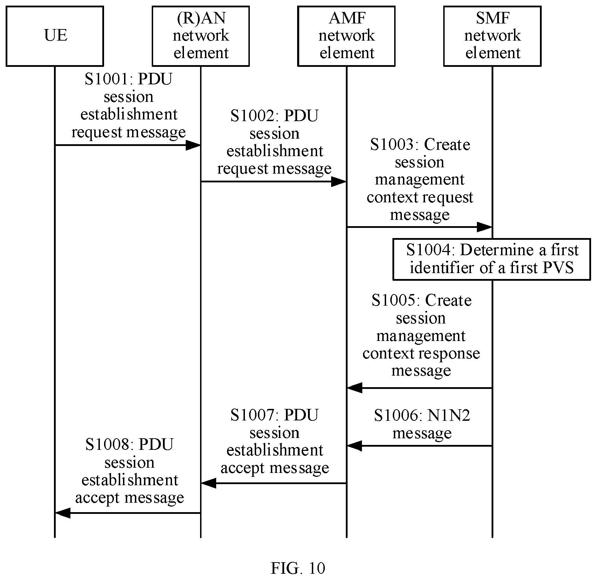

The session establishment accept message, for example, the PDU session establishment accept message, may be a message that requests to establish a session in the session establishment procedure, and a specific name is not limited. For example, after receiving the PDU session establishment request message, the session management network element may send, to the access management network element in response to the PDU session establishment request message, the PDU session establishment accept message that carries the first identifier, so that the access management network element forwards the PDU session establishment accept message to the terminal device. For specific implementation of the PDU session establishment accept message, refer to related descriptions in FIG. 10 to FIG. 14. Details are not described herein again.

It should be noted that, similar to the registration request message and the session establishment request message, the registration accept message and the session establishment accept message may also be carried in the N2 message. In other words, that the N2 message carries the first identifier may be that the N2 message carries the first identifier, or may be that the message carried in the N2 message carries the first identifier. In addition, in some procedures, for example, the session modification procedure, the first identifier may be further carried in a session modification accept message, for example, a PDU session modification accept message (PDU session modification accept message). This is not limited.

In addition, it can be learned from the foregoing descriptions that the one or more messages sent by the access management network element may be messages in different procedures, for example, messages in the registration procedure and the session establishment procedure. In this way, the access management network element may send the first identifier not only in the registration procedure, but also in the session establishment procedure, to avoid a case in which the terminal device cannot access the first NPN in time because the access management network element does not send the first identifier in time, so that access efficiency can be improved.

In some other design solutions, if the first network element is the access management network element, the first identifier may be carried in one or more of the following: a create session management context response message, for example, a Nsmf_PDU session_create SM context response message, the N1N2 message, for example, Namf_communication_N1N2 message transfer, N2 session management information (N2 SM information), N1 session management information (N2 SM information), a PDU session establishment accept message, or a protocol configuration option (protocol configuration option, PCO).

The create session management context response message and the N1N2 message each may be a message that requests to establish a session in the session establishment procedure, and message names are not limited. For example, the session management network element may separately send the create session management context response message and the N1N2 message to the access management network element in response to the create session management context request message. For the create session management context response message and the N1N2 message, the first identifier may be carried in the two messages, or may be carried in either of the two messages.

Further, if the N1N2 message carries the first identifier, the N1N2 message may carry the first identifier, the N2 session management information and/or the N1 session management information that are/is carried in the N1N2 message may carry the first identifier, the PDU session establishment accept message carried in the N1 session management information may carry the first identifier, or the PCO carried in the PDU session establishment accept message may carry the first identifier. This is not limited.

In addition, it can be learned from the foregoing descriptions that the one or more messages sent by the session management network element may be messages in different procedures, for example, messages in the registration procedure and the session establishment procedure. In this way, the session management network element may send the first identifier not only in the registration procedure, but also in the session establishment procedure, to avoid a case in which the terminal device cannot quickly access the first NPN because the session management network element does not send the first identifier in time, so that access efficiency can be improved.

It should be understood that, that the registration accept message, the session establishment accept message, the N2 message, and the N1N2 message carry the first identifier is merely an example, and constitutes no limitation. For example, the first identifier may alternatively be carried in another message or a configuration option in the registration procedure and/or another message or a configuration option in the session establishment procedure, and a specific name is not limited.

Further, if the terminal device receives the first identifier, the terminal device may access the first PVS based on the first identifier, to obtain the credential of the first NPN, thereby accessing the first NPN.

Optionally, with reference to the embodiment shown in FIG. 7, in a first implementation scenario, the first network element may be the session management network element, and S702 may specifically include: receiving the network information of the first NPN or the network information corresponding to the first PVS from the access management network element.

Specifically, the access management network element has a second correspondence. The second correspondence may be a correspondence between the network information of the first NPN and the network information corresponding to the first PVS, or may be obtained by the access management network element from the unified data management network element and/or the application server. In this way, after receiving the first network information from the terminal device, the access management network element may send, to the session management network element, information that can be identified by the session management network element. For example, if the session management network element can identify the network information corresponding to the first PVS, the access management network element may send the network information corresponding to the first PVS. Alternatively, if the session management network element can identify the network information of the first NPN, the access management network element may send the network information of the first NPN. In this way, it can be avoided that the terminal device cannot access the first NPN because the access management network element does not correctly identify the network information, to improve an access success rate and reliability. In addition, only a correspondence between the information that can be identified and the first identifier, for example, only the first correspondence between the network information corresponding to the first PVS and the first identifier, may be configured for the session management network element. In this way, a resource configuration of the session management network element can be optimized, to improve running efficiency.

Optionally, with reference to the embodiment shown in FIG. 7, in a second implementation scenario, after S701 and before S702, the method may further include:
Step 1: The first network element sends a first authentication request message.

The first authentication request message may request an authentication server to perform authentication on the terminal device that wants to access the first NPN, and a specific name is not limited. The authentication server may be a server corresponding to the first NPN. For example, the first authentication request message may be an authentication/authorization request message (authentication/authorization request message), and requests the authentication server, for example, a data network authentication, authorization, accounting (data network authentication, authorization, accounting, DN-AAA) server, to perform reauthentication on the terminal device that wants to access the first DN. Alternatively, the first authentication request message may be a network slice authentication request message, for example, a Nnssaaf_NSSAA_authenticate request message, and requests the authentication server, for example, an authentication, authorization, accounting server (authentication, authorization, accounting server, AAA-S), to perform authentication on the terminal device that wants to access the first network slice. Details are described below.

In a possible design solution, if the first network element is the access management network element, the first network element may determine, based on the first NSSAI and/or the second NSSAI in the first network information, the authentication server corresponding to the first NPN, for example, determine the AAA-S corresponding to the first network slice. Because the access management network element cannot directly communicate with the authentication server, the first authentication request message sent by the access management network element is also a message that cannot be identified by the authentication server. In this case, the access management network element may first send the first authentication request message to the NSSAAF network element, for example, send a network slice authentication request message. In this way, the NSSAAF network element may convert the first authentication request message into a second authentication request message that can be identified by the authentication server, and send the second authentication request message to the authentication server. The second authentication request message may also request the authentication server to perform authentication on the terminal device that wants to access the first NPN, and a specific name is not limited. For example, the second authentication request message may be an authentication/authorization/accounting protocol message (AAA protocol message).

In another possible design solution, if the first network element is the session management network element, the first network element may determine, based on the first DNN and/or the second DNN in the first network information, the authentication server corresponding to the first NPN, for example, determine the DN-AAA corresponding to the first DN. The session management network element may send the first authentication request message to the authentication server, for example, send the authentication/authorization request message to the DN-AAA, so that the authentication server receives a second authentication request message, for example, receives the authentication/authorization request message. In this case, the first authentication request message and the second authentication request message are a same message. In other words, the first authentication request message sent by the session management network element can be directly forwarded to the authentication server

It can be learned that, if the first NPN that the terminal device wants to access is the first network slice, the access management network element may initiate authentication on the terminal device to the AAA-S. If the first NPN that the terminal device wants to access is the first DNN, the session management network element may initiate authentication on the terminal device to the DN-AAA. However, this is not limited. For example, if the terminal device wants to access the SO-SNPN, authentication on the terminal device may also be initiated to the authentication server.

Step 2: The authentication server receives the second authentication request message, and sends a second authentication response message.

The second authentication response message may indicate whether the authentication succeeds or fails, and a specific name is not limited. For example, the second authentication response message may be an authentication/authorization/accounting protocol message or an authentication/authorization response message (authentication/authorization response message). The second authentication response message may carry first indication information or second indication information. The first indication information may indicate that the authentication succeeds, and the second indication information may indicate that the authentication fails. In other words, the authentication server may generate corresponding indication information based on an authentication success or failure, and carrying the indication information in the second authentication response message. For example, if the AAA-S is configured to perform slice authentication, and the slice authentication fails, the AAA-S carries the second indication information in the authentication/authorization/accounting protocol message, and sends the authentication/authorization/accounting protocol message to the NSSAAF network element. For another example, if the DN-AAA is configured to perform reauthentication, and the reauthentication fails, the DN-AAA carries the second indication information in the authentication/authorization response message, and sends the authentication/authorization response message to the session management network element.

Step 3: The first network element receives a first authentication response message.

It can be learned from the related descriptions in step 1 and step 2 that, if the first network element is the access management network element, the NSSAAF network element may first receive the second authentication response message from the authentication server, for example, receive the authentication/authorization/accounting protocol message from the AAA-S, convert the second authentication response message into the first authentication response message that can be identified by the first network element, and send the first authentication response message to the first network element. The first authentication response message may also indicate whether the authentication succeeds or fails, and a specific name is not limited. For example, the first authentication response message may be a network slice authentication response message, for example, a Nnssaaf_NSSAA_authenticate response message

If the first network element is the session management network element, the session management network element may directly receive the first authentication response message from the authentication server, for example, receive the authentication/authorization response message from the DN-AAA. In this case, the first authentication response message and the second authentication response message are a same message. In other words, the second authentication response message sent by the authentication server can be directly forwarded by the session management network element.

Further, after receiving the first authentication response message, the first network element may determine, based on indication information carried in the first authentication response message, whether to perform S702. For example, if the first network element determines, based on the first authentication response message, for example, the network slice authentication response message, that the slice authentication succeeds, it indicates that the terminal device has had the credential of the first NPN, for example, a credential of the first network slice or a credential of the first DN. In this case, the first network element may not perform S702. If the first network element determines, based on the first authentication response message, that the authentication fails, it indicates that a reason for the authentication failure may be that the terminal device does not have the credential of the first NPN. In this case, the first network element may perform S702. If the slice authentication fails, the first network element may send, to the terminal device, a non-access stratum mobility management transport message (NAS MM transport message) that carries the first identifier It can be learned that the first network element determines whether the authentication fails, so that the credential of the first NPN is sent to the terminal device only when the terminal device does not have the credential of the first NPN, to avoid a waste of a communication resource, improve communication efficiency, and be compatible with an existing authentication procedure. It should be noted that performing S702 based on the authentication failure is merely an example manner, and constitutes no limitation. For example, S702 may also be performed based on the authentication success.

Optionally, with reference to the embodiment shown in FIG. 7 and the second implementation scenario, in a third implementation scenario, the first authentication response message carries the first identifier.

Specifically, because the authentication server mainly provides an authentication service for the first NPN, the first identifier corresponding to the first NPN may also be preconfigured for the authentication server, so that the authentication server can send, when determining that the authentication fails, the authentication response message that carries the first identifier. In this way, the first network element may obtain the first identifier from the authentication response message, and forward the first identifier to the terminal device.

It should be understood that, because the first network element may obtain the first identifier by interacting with the authentication server, the correspondence does not need to be configured, so that storage space of the first network element can be further saved, a resource configuration can be further optimized, and running efficiency can be further improved.

Optionally, with reference to the embodiment shown in FIG. 7, in a fourth implementation scenario, the first network element may be a unified data management network element, for example, a UDM network element/a UDR network element. In this case, the terminal device may send the first network information to the unified data management network element. The first network information may be carried in a first message. In other words, the first message is for carrying the first network information. A specific name of the first message is not limited. For example, the first message may be one or more of the following: an access stratum message, the registration request message, a non-access stratum NAS message, an N1 session management container (N1 SM container), or the session establishment request message, for example, the PDU session establishment request message.

The access management network element, for example, the AMF network element, or the session management network element, for example, the SMF network element may receive the first message from the terminal device, and send a second message to the unified data management network element. The first network information may be carried in the second message. In other words, the second message may also be for carrying the first network information. A specific name of the second message is not limited. For example, the second message may be a Nudm_SDM_Get message sent by the access management network element or the session management network element to the unified data management network element by using a Nudm_SDM_Get service.

Correspondingly, the unified data management network element may receive the second message from the access management network element or the session management network element, to send the first identifier of the first PVS to the terminal device. The first identifier may be carried in a third message. In other words, the third message may be for carrying the first identifier. A specific name of the third message is not limited. For example, the third message may be one or more of the following: a Nudm_SDM_Get response message or a Nudm_SDM_Get message. In other words, the unified data management network element may send, to the access management network element or the session management network element by using the Nudm_SDM_Get service, the Nudm_SDM_Get response message or the Nudm_SDM_Get message that carries the first identifier. In this way, the access management network element or the session management network element may receive the third message from the unified data management network element, to send a fourth message to the terminal device. The first identifier may be carried in the fourth message. In other words, the fourth message may also be for carrying the first identifier. A specific name of the fourth message is not limited. For example, the fourth message may be one or more of the following: an access stratum message, the registration accept message, a non-access stratum NAS message, an N1 session management container, or the PDU session establishment accept message. In this way, the terminal device may obtain the first identifier based on the fourth message, to access the first NPN.

In addition, for specific implementation of determining the first identifier of the first PVS by the unified data management network element, refer to the related descriptions in S702. Details are not described herein again.

Optionally, with reference to the fourth implementation scenario, in a fifth implementation scenario, a second correspondence is configured for the access management network element or the session management network element. In this way, after receiving the first network information from the terminal device, the access management network element or the session management network element may send, to the unified data management network element based on the second correspondence, information that can be identified by the unified data management network element. For example, if the unified data management network element can identify the network information corresponding to the first PVS, the access management network element or the session management network element may send, based on the second correspondence, the network information corresponding to the first PVS. Alternatively, if the unified data management network element can identify the network information of the first NPN, the access management network element or the session management network element may send the network information of the first NPN based on the second correspondence. In this way, it can be avoided that the terminal device cannot access the first NPN because the unified data management network element does not correctly identify the network information, to improve an access success rate and reliability. In addition, only a correspondence between the information that can be identified and the first identifier, for example, only the first correspondence between the network information corresponding to the first PVS and the first identifier, may be configured for the unified data management network element. In this way, a resource configuration of the unified data management network element can be optimized, to improve running efficiency.

Optionally, with reference to the embodiment shown in FIG. 7, in a sixth implementation scenario, the first network element may be a policy control network element, for example, a PCF network element. In this case, the terminal device may send the first network information to the policy control network element. The first network information may be carried in a fifth message. In other words, the fifth message may also be for carrying the first network information. A specific name of the fifth message is not limited. For example, the fifth message may be one or more of the following: an access stratum registration request message, a non-access stratum NAS message, an N1 session management container, or the session establishment request message, for example, the PDU session establishment request message.

In an implementation, if the access management network element, for example, the AMF network element, receives the fifth message from the terminal device, the access management network element may send a sixth message to the policy control network element. The first network information may be carried in the sixth message. In other words, the sixth message may also be for carrying the first network information. A specific name of the sixth message is not limited. For example, the sixth message may be one or more of the following: a Npcf_AMPolicyControl_Create message, a Npcf_AMPolicyControl_Update message, a Npcf_UEPolicyControl Create message, or a Npcf_ UEPolicyControl Update message. In this way, the policy control network element may obtain the first network information based on the sixth message.

In another implementation, if the session management network element, for example, the SMF network element, receives the fifth message from the terminal device, the session management network element may send a seventh message to the policy control network element. The first network information may be carried in the seventh message. In other words, the seventh message may also be for carrying the first network information. A specific name of the seventh message is not limited. For example, the seventh message may be one or more of the following: a Npcf_SMPolicyControl_Create message or a Npcf_SMPolicyControl_Update message. In this way, the policy control network element may also obtain the first network information based on the seventh message.

In still another implementation, if the access management network element receives the fifth message from the terminal device, the access management network element may further send, to the session management network element, the create session management context request message that carries the first network information. In this way, after receiving the create session management context request message from the access management network element, the session management network element may also send, to the policy control network element, a seventh message that carries the first network information, so that the policy control network element obtains the first network information.

Correspondingly, after obtaining the first network information, the policy control network element may send the first identifier of the first PVS to the terminal device. In an implementation, the first identifier may be carried in an eighth message. In other words, the eighth message may be for carrying the first identifier. A specific name of the eighth message is not limited. For example, the eighth message may be one or more of the following: a Npcf_AMPolicyControl_Create response message, a Npcf_AMPolicyControl_Update response message, a Npcf_UEPolicyControl Create response message, a Npcf_ UEPolicyControl Update response message, a Npcf_UEPolicyControl UpdateNotify request message, or a Npcf_ Update Notify message. In an implementation, the first identifier may be carried in a ninth message. In other words, the ninth message may be for carrying the first identifier. A specific name of the ninth message is not limited. For example, the ninth message may be one or more of the following: a Npcf_SMPolicyControl_Create response message, a Npcf_SMPolicyControl_Update response message, or a Npcf_SMPolicyControl_UpdateNotify request message.

In this way, after the access management network element receives the eighth message from the policy control network element, or the session management network element receives the ninth message from the policy control network element, the access management network element or the session management network element may send the first identifier of the first PVS to the terminal device, so that the terminal device obtains the first identifier, thereby accessing the first NPN. The first identifier may be carried in the tenth message. In other words, the tenth message may be for carrying the first identifier A specific name of the tenth message is not limited. For example, the tenth message may be one or more of the following: an access stratum message, the registration accept message, a non-access stratum NAS message, an N1 session management container, or the session establishment accept message, for example, the PDU session establishment accept message.

In addition, for specific implementation of determining the first identifier of the first PVS by the policy control network element, refer to the related descriptions in S702. Details are not described herein again.

Optionally, with reference to the sixth implementation scenario, in a seventh implementation scenario, a second correspondence is configured for the access management network element or the session management network element. In this way, after receiving the first network information from the terminal device, the access management network element or the session management network element may send, to the policy control network element based on the second correspondence, information that can be identified by the policy control network element. For example, if the policy control network element can identify the network information corresponding to the first PVS, the access management network element or the session management network element may send, based on the second correspondence, the network information corresponding to the first PVS. Alternatively, if the policy control network element can identify the network information of the first NPN, the access management network element or the session management network element may send the network information of the first NPN based on the second correspondence. In this way, it can be avoided that the terminal device cannot access the first NPN because the policy control network element does not correctly identify the network information, to improve an access success rate and reliability. In addition, only a correspondence between the information that can be identified and the first identifier, for example, only the first correspondence between the network information corresponding to the first PVS and the first identifier, may be configured for the policy control network element. In this way, a resource configuration of the policy control network element can be optimized, to improve running efficiency.

With reference to FIG. 7, the foregoing describes an overall procedure of the communication method provided in this embodiment of this application. With reference to FIG. 8 to FIG. 14, the following describes in detail procedures of the communication method shown in FIG. 7 in specific application scenarios.

For example, FIG. 8 is a schematic flowchart 2 of a communication method according to an embodiment of this application. The communication method is applicable to communication between the UE (the terminal device), the (R)AN network element, the AMF network element (the first network element), and the AUSF network element that are shown in FIG. 5. As shown in FIG. 8, the communication method may include the following steps.

S801: The UE sends a registration request message to the (R)AN network element, and the (R)AN network element receives the registration request message from the UE.

The UE may camp on a cell of the (R)AN network element, to send the registration request message to the (R)AN network element. The registration request message carries first network information. For specific implementation, refer to the related descriptions in S701. Details are not described herein again.

S802: The (R)AN network element sends the registration request message to the AMF network element, and the AMF network element receives the registration request message from the (R)AN network element.

The registration request message may be transparently transmitted via the (R)AN network element, to be sent to the AMF network element.

S803: The AMF network element initiates access authentication on the UE.

The access authentication may be performing authentication on a default credential of the UE. The default credential may be a device credential, a credential stored in a SIM card, or the like. This is not limited in this embodiment of this application.

S804: The AMF network element determines a first identifier of a first PVS.

If the AMF network element determines that the access authentication on the UE succeeds, the AMF network element may determine the first identifier based on a first correspondence and the first network information. For specific implementation of the first correspondence, refer to the related descriptions in S702. Details are not described herein again.

S805: The AMF network element sends a registration accept message to the (R)AN network element, and the (R)AN network element receives the registration accept message from the AMF network element.

The registration accept message carries the first identifier. For specific implementation of S804 and S805, refer to the related descriptions in S702. Details are not described herein again.

S806: The (R)AN network element sends the registration accept message to the UE, and the UE receives the registration accept message from the (R)AN network element.

The registration accept message may be transparently transmitted via the (R)AN network element, to be sent to the UE. In this way, the UE may access the first PVS based on the first identifier in the registration accept message, to obtain a credential of a first NPN, thereby accessing the first NPN.

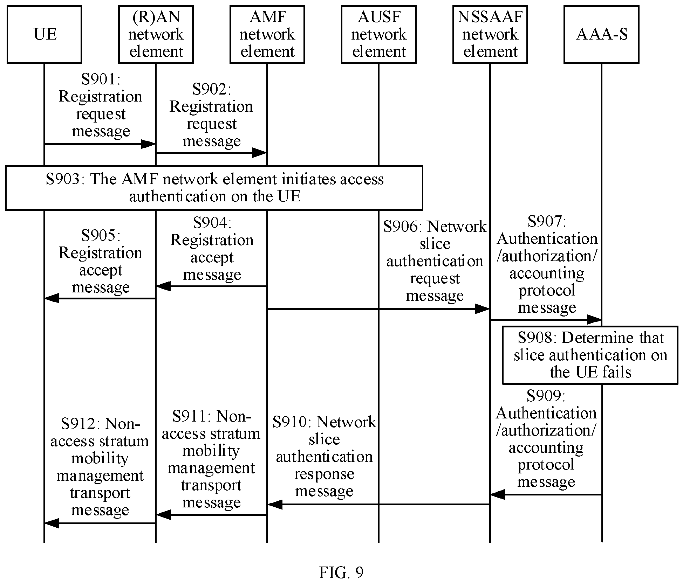

For example, FIG. 9 is a schematic flowchart 3 of a communication method according to an embodiment of this application. The communication method is applicable to communication between the UE (the terminal device), the (R)AN network element, the AMF network element (the first network element), the AUSF network element, and the NSSAAF network element that are shown in FIG. 5 and an AAA-S. As shown in FIG. 9, the communication method may include the following steps.

S901: The UE sends a registration request message to the (R)AN network element, and the (R)AN network element receives the registration request message from the UE.

S902: The (R)AN network element sends the registration request message to the AMF network element, and the AMF network element receives the registration request message from the (R)AN network element.

S903: The AMF network element initiates access authentication on the UE.

For specific implementation of S901, refer to the related descriptions in S801 and S701. For specific implementation of S902, refer to related descriptions in S802. For specific implementation of S903, refer to related descriptions in S803. Details are not described herein again.

S904: The AMF network element sends a registration accept message to the (R)AN network element, and the (R)AN network element receives the registration accept message from the AMF network element.

If the AMF network element determines that the access authentication on the UE succeeds, S904 may be performed. The registration accept message does not carry a first identifier. This is different from 1005 above.

S905: The (R)AN network element sends the registration accept message to the UE, and the UE receives the registration accept message from the (R)AN network element.

S906: The AMF network element sends a network slice authentication request message to the NSSAAF network element, and the NSSAAF network element receives the network slice authentication request message from the AMF network element.

The network slice authentication request message may request the AAA-S to perform slice authentication on the UE. In addition, a sequence of performing S904 and S905 and performing S906 is not limited.

S907: The NSSAAF network element sends an authentication/authorization/accounting protocol message to the AAA-S, and the AAA-S receives the authentication/authorization/accounting protocol message from the NSSAAF network element.

The authentication/authorization/accounting protocol message is obtained by converting the network slice authentication request message sent by the NSSAAF network element. For specific implementation of S906 and S907, refer to the related descriptions in step 1. Details are not described herein again.

S908: The AAA-S determines that the slice authentication on the UE fails.

S909: The AAA-S sends an authentication/authorization/accounting protocol message to the NSSAAF network element, and the NSSAAF network element receives the authentication/authorization/accounting protocol message from the AAA-S.

The authentication/authorization/accounting protocol message may indicate that the slice authentication on the UE fails. Optionally, the authentication/authorization/statistical protocol message may carry the first identifier. For specific implementation of S908 and S909, refer to the related descriptions in step 2 and the third implementation scenario. Details are not described herein again.

S910: The NSSAAF network element sends a network slice authentication response message to the AMF network element, and the AMF network element receives the network slice authentication response message from the NSSAAF network element.

The network slice authentication response message is obtained by converting the authentication/authorization/accounting protocol message sent by the AAA-S. Optionally, the network slice authentication response message correspondingly carries the first identifier. In addition, for specific implementation of S910, refer to the related descriptions in step 3. Details are not described herein again.

S911: The AMF network element sends a non-access stratum mobility management transport message to the (R)AN network element, and the (R)AN network element receives the non-access stratum mobility management transport message from the AMF network element.

The AMF network element may obtain the first identifier in the network slice authentication response message, generate the non-access stratum mobility management transport message that carries the first identifier, and send the non-access stratum mobility management transport message to the (R)AN network element.

S912: The (R)AN network element sends the non-access stratum mobility management transport message to the UE, and the UE receives the non-access stratum mobility management transport message from the (R)AN network element.

The non-access stratum mobility management transport message may be transparently transmitted via the (R)AN network element, to be sent to the UE. In this way, the UE may access the first PVS based on the first identifier in the non-access stratum mobility management transport message, to obtain a credential of a first NPN, for example, obtain a credential of a first network slice, thereby accessing the first NPN, for example, accessing the first network slice. In addition, for specific implementation of S911 and S912, refer to the related descriptions in step 3. Details are not described herein again.

It can be learned that, in the procedure shown in FIG. 9, after the slice authentication fails, the AAA-S provides the first identifier for the AMF network element. This is different from the procedure shown in FIG. 8 In this way, the foregoing correspondence may not need to be configured for the AMF network element, to save storage space, optimize a resource configuration, and improve running efficiency. In addition, because a reason for the slice authentication failure is usually that the UE does not have the credential of the first NPN, the AMF network element sends the corresponding first identifier to the UE only when the UE does not have the credential, to avoid a waste of a communication resource and improve communication efficiency.

For example, FIG. 10 is a schematic flowchart 4 of a communication method according to an embodiment of this application. The communication method is applicable to communication between the UE (the terminal device), the (R)AN network element, the AMF network element, and the SMF network element (the first network element) that are shown in FIG. 5. As shown in FIG. 10, the communication method may include the following steps.

S 1001: The UE sends a PDU session establishment request message to the (R)AN network element, and the (R)AN network element receives the PDU session establishment request message from the UE.

After completing a registration procedure, the UE may send the PDU session establishment request message to the (R)AN network element, to request the SMF network element to establish a PDU session of the UE. The PDU session establishment request message carries first network information. For specific implementation, refer to the related descriptions in S701. Details are not described herein again.

S 1002: The (R)AN network element sends the PDU session establishment request message to the AMF network element, and the AMF network element receives the PDU session establishment request message from the (R)AN network element.

The PDU session establishment request message may be transparently transmitted via the (R)AN network element, to be sent to the AMF network element.

S 1003: The AMF network element sends a create session management context request message to the SMF network element, and the SMF network element receives the create session management context request message from the AMF network element.

The PDU session establishment request message may be carried in the create session management context request message. In addition, for specific implementation of S1003, refer to the related descriptions in S701. Details are not described herein again.

S1004: The SMF network element determines a first identifier of a first PVS.

The SMF network element may determine the first identifier based on a first correspondence and the first network information. For specific implementation of the first correspondence, refer to the related descriptions in S702. Details are not described herein again.

S1005: The SMF network element sends a create session management context response message to the AMF network element, and the AMF network element receives the create session management context response message from the SMF network element.

S1006: The SMF network element sends an N1N2 message to the AMF network element, and the AMF network element receives the N1N2 message from the SMF network element.

The SMF network element may register connection management of the PDU session on a UDM network element (not shown in FIG. 10), obtain session management subscription information, and send the create session management context response message to the AMF network element. In addition, the SMF network element may initiate authentication on the UE, and send the N1N2 message to the AMF network element based on an authentication result. The first identifier may be carried in the create session management context response message, and/or may be carried in the N1N2 message. Alternatively, the first identifier may be carried in one or more of the following carried in the N1N2 message: N2 session management information, N1 session management information, a PDU session establishment accept message, or a protocol configuration option PCO.

S1007: The AMF network element sends the PDU session establishment accept message to the (R)AN network element, and the (R)AN network element receives the PDU session establishment accept message from the AMF network element.

The AMF network element may obtain the first identifier in the N1N2 message or the create session management context response message, to generate the PDU session establishment accept message that carries the first identifier, and send the PDU session establishment accept message to the (R)AN network element. In addition, for specific implementation of S1004 to S1007, refer to the related descriptions in S702. Details are not described herein again.

S1008: The (R)AN network element sends the PDU session establishment accept message to the UE, and the UE receives the PDU session establishment accept message from the (R)AN network element.

The PDU session establishment accept message may be transparently transmitted via the (R)AN network element, to be sent to the UE. In this way, the UE may access the first PVS based on the first identifier in the PDU session establishment accept message, to obtain a credential of a first NPN, thereby accessing the first NPN.

It can be learned that, different from the registration procedure shown in FIG. 8, the procedure shown in FIG. 10 is a PDU session establishment procedure. In other words, the UE can obtain the first identifier and access the first NPN regardless of the registration procedure or the PDU session establishment procedure, so that access reliability can be improved.

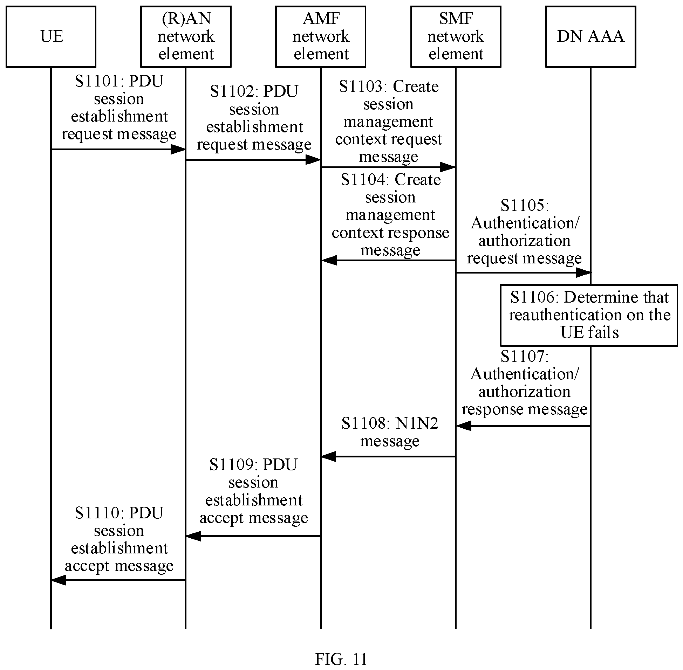

For example, FIG. 11 is a schematic flowchart 5 of a communication method according to an embodiment of this application. The communication method is applicable to communication between the UE (the terminal device), the (R)AN network element, the AMF network element, and the SMF network element (the first network element) that are shown in FIG. 5 and a DN-AAA. As shown in FIG. 11, the communication method may include the following steps.

S1101: The UE sends a PDU session establishment request message to the (R)AN network element, and the (R)AN network element receives the PDU session establishment request message from the UE.

For specific implementation of S1101, refer to the related descriptions in S1001 and S701. Details are not described herein again.

S1102: The (R)AN network element sends the PDU session establishment request message to the AMF network element, and the AMF network element receives the PDU session establishment request message from the (R)AN network element.

S1103: The AMF network element sends a create session management context request message to the SMF network element, and the SMF network element receives the create session management context request message from the AMF network element.

For specific implementation of S1103, refer to the related descriptions in S1003 and S701. Details are not described herein again.

S1104: The SMF network element sends a create session management context response message to the AMF network element, and the AMF network element receives the create session management context response message from the SMF network element.

The SMF network element may register connection management of a PDU session on a UDM network element (not shown in FIG. 11), obtain session management subscription information, and send the create session management context response message to the AMF network element. The create session management context response message does not carry a first identifier

S1105: The SMF network element sends an authentication/authorization request message to the DN-AAA, and the DN-AAA receives the authentication/authorization request message from the SMF network element.

The authentication/authorization request message requests the DN-AAA to perform reauthentication on the UE. For specific implementation of S1105, refer to the related descriptions in step 1. Details are not described herein again.

S1106: The DN-AAA determines that the reauthentication on the UE fails.

S1107: The DN-AAA sends an authentication/authorization response message to the SMF network element, and the SMF network element receives the authentication/authorization response message from the DN-AAA.

The authentication/authorization response message may indicate that the reauthentication on the UE fails. Optionally, the authentication/authorization response message may carry the first identifier. For specific implementation of S 1006 and S1007, refer to the related descriptions in step 2 and the third implementation scenario. Details are not described herein again.

S1108: The SMF network element sends an N1N2 message to the AMF network element, and the AMF network element receives the N1N2 message from the SMF network element.

The SMF network element may obtain the first identifier in the authentication/authorization response message, to generate the N1N2 message that carries the first identifier, and send the N1N2 message to the AMF network element. The first identifier may be carried in the N1N2 message, or may be carried in one or more of the following carried in the N1N2 message: N2 session management information, N1 session management information, a PDU session establishment accept message, or a protocol configuration option PCO.

In addition, for specific implementation of S1108, refer to the related descriptions in step 3. Details are not described herein again.

S1109: The AMF network element sends the PDU session establishment accept message to the (R)AN network element, and the (R)AN network element receives the PDU session establishment accept message from the AMF network element.

The AMF network element may obtain the first identifier in the N1N2 message or the create session management context response message, to generate the PDU session establishment accept message that carries the first identifier, and send the PDU session establishment accept message to the (R)AN network element. In addition, for specific implementation of S1109, refer to the related descriptions in S702. Details are not described herein again.

S1110: The (R)AN network element sends the PDU session establishment accept message to the UE, and the UE receives the PDU session establishment accept message from the (R)AN network element.

The PDU session establishment accept message may be transparently transmitted via the (R)AN network element, to be sent to the UE. In this way, the UE may access a first PVS based on the first identifier in the PDU session establishment accept message, to obtain a credential of a first NPN, for example, obtain a credential of a first DN, thereby accessing the first NPN, for example, accessing the first DN.

It can be learned that, in the procedure shown in FIG. 11, after the reauthentication fails, the DN-AAA provides the first identifier for the SMF network element. This is different from the procedure shown in FIG. 10. In this way, the foregoing correspondence may not need to be configured for the SMF network element, to save storage space, optimize a resource configuration, and improve running efficiency. In addition, because a reason for the reauthentication failure is usually that the UE does not have the credential of the first NPN, the SMF network element sends the corresponding first identifier to the UE only when the UE does not have the credential, to avoid a waste of a communication resource and improve communication efficiency.

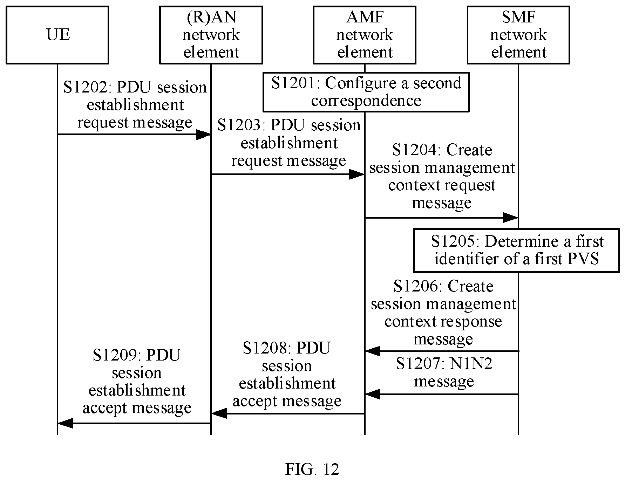

For example, FIG. 12 is a schematic flowchart 6 of a communication method according to an embodiment of this application. The communication method is applicable to communication between the UE (the terminal device), the (R)AN network element, the AMF network element, and the SMF network element (the first network element) that are shown in FIG. 5. As shown in FIG. 12, the communication method may include the following steps.

S1201: A second correspondence is configured for the AMF network element.

The second correspondence may be a correspondence between network information of a first NPN and network information corresponding to a first PVS, and may be obtained from another network element, for example, a UDM network element/UDR network element or an AF network element. In addition, for specific implementation of S1201, refer to the related descriptions in the first implementation scenario. Details are not described herein again.

S1202: The UE sends a PDU session establishment request message to the (R)AN network element, and the (R)AN network element receives the PDU session establishment request message from the UE.

S1203: The (R)AN network element sends the PDU session establishment request message to the AMF network element, and the AMF network element receives the PDU session establishment request message from the (R)AN network element.

For specific implementation of S1202 and S1203, refer to the related descriptions in S1001, S1002, and S701. Details are not described herein again. In addition, a sequence of performing S1201 and performing S1202 and S1203 is not limited.

S 1204: The AMF network element sends a create session management context request message to the SMF network element, and the SMF network element receives the create session management context request message from the AMF network element.

The AMF network element may obtain first network information in the PDU session establishment request message, and send, to the SMF network element based on the second correspondence, information that can be identified by the SMF network element, for example, send the create session management context request message that carries the network information corresponding to the first PVS. In addition, for specific implementation of S1204, also refer to the related descriptions in the first implementation scenario. Details are not described herein again.

S 1205: The SMF network element determines a first identifier of the first PVS.

In this case, only the correspondence between the information that can be identified by the SMF network element and the first identifier, for example, only a first correspondence between the network information corresponding to the first PVS and the first identifier of the first PVS, may be configured for the SMF network element. In this way, the SMF network element may determine the first identifier based on the first correspondence and the network information corresponding to the first PVS. For specific implementation of the first correspondence, refer to the related descriptions in S702. Details are not described herein again.

S 1206: The SMF network element sends a create session management context response message to the AMF network element, and the AMF network element receives the create session management context response message from the SMF network element.

S1207: The SMF network element sends an N1N2 message to the AMF network element, and the AMF network element receives the N1N2 message from the SMF network element.

The first identifier may be carried in the create session management context response message, and/or may be carried in the N1N2 message. Alternatively, the first identifier may be carried in one or more of the following carried in the N1N2 message: N2 session management information, N1 session management information, a PDU session establishment accept message, or a protocol configuration option PCO.

S 1208: The AMF network element sends the PDU session establishment accept message to the (R)AN network element, and the (R)AN network element receives the PDU session establishment accept message from the AMF network element.

The AMF network element may obtain the first identifier in the N1N2 message or the create session management context response message, to generate the PDU session establishment accept message that carries the first identifier, and send the PDU session establishment accept message to the (R)AN network element. In addition, for specific implementation of S1205 to S1208, refer to the related descriptions in S 1006 and S702. Details are not described herein again.

S1209: The (R)AN network element sends the PDU session establishment accept message to the UE, and the UE receives the PDU session establishment accept message from the (R)AN network element.

The PDU session establishment accept message may be transparently transmitted via the (R)AN network element, to be sent to the UE. In this way, the UE may access the first PVS based on the first identifier in the PDU session establishment accept message, to obtain a credential of the first NPN, thereby accessing the first NPN.

It can be learned that, in the procedure shown in FIG. 12, the AMF network element provides the SMF network element with the information that can be identified by the SMF network element. This is different from the procedure shown in FIG. 10. It can be avoided that the UE cannot access the first NPN because the SMF network element does not correctly identify the network information, to improve access reliability. In addition, only the correspondence between the information that can be identified by the SMF network element and the first identifier, for example, only the first correspondence between the network information corresponding to the first PVS and the first identifier, may be configured for the SMF network element. In this way, storage space of the SMF network element can be saved, a resource configuration can be optimized, and running efficiency can be improved.

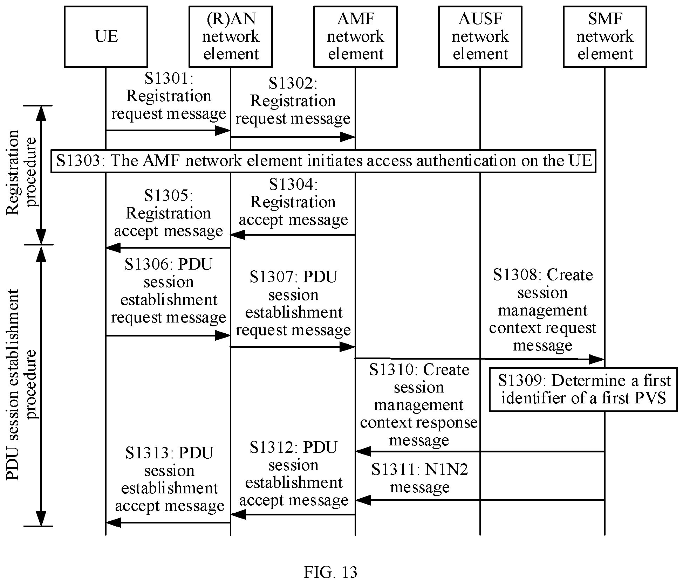

For example, FIG. 13 is a schematic flowchart 7 of a communication method according to an embodiment of this application. The communication method is applicable to communication between the UE (the terminal device), the (R)AN network element, the AMF network element, the AUSF network element, and the SMF network element (the first network element) that are shown in FIG. 5. As shown in FIG. 13, the communication method may include the following steps.

S1301: The UE sends a registration request message to the (R)AN network element, and the (R)AN network element receives the registration request message from the UE.

The registration request message carries first network information. For specific implementation of S1301, refer to the related descriptions in S801 and S701. Details are not described herein again.

S1302: The (R)AN network element sends the registration request message to the AMF network element, and the AMF network element receives the registration request message from the (R)AN network element.

S1303: The AMF network element initiates access authentication on the UE.

For specific implementation of S1303, refer to the related descriptions in S803. Details are not described herein again.

S1304: The AMF network element sends a registration accept message to the (R)AN network element, and the (R)AN network element receives the registration accept message from the AMF network element.

S1305: The (R)AN network element sends the registration accept message to the UE, and the UE receives the registration accept message from the (R)AN network element.

The registration accept message does not carry a first identifier. In other words, in the registration procedure in S1301 to S1305, the AMF network element may receive and store only the first network information, but does not send the first identifier

S1306: The UE sends a PDU session establishment request message to the (R)AN network element, and the (R)AN network element receives the PDU session establishment request message from the UE.

After completing a registration procedure, the UE may send the PDU session establishment request message to the (R)AN network element, to request the SMF network element to establish a PDU session of the UE. Because the UE has sent the first network information in the foregoing registration procedure, the PDU session establishment request message may not carry the first network information. However, this is not limited.

S1307: The (R)AN network element sends the PDU session establishment request message to the AMF network element, and the AMF network element receives the PDU session establishment request message from the (R)AN network element.

S1308: The AMF network element sends a create session management context request message to the SMF network element, and the SMF network element receives the create session management context request message from the AMF network element.

After receiving the PDU session establishment request message from the (R)AN network element, the AMF network element may carry the PDU session establishment request message in the create session management context request message, and also carry the first network information in the create session management context request message, to send the create session management context request message to the SMF network element. In addition, for specific implementation of S1308, refer to the related descriptions in S701. Details are not described herein again.

S1309: The SMF network element determines the first identifier of a first PVS.

The SMF network element may determine the first identifier based on a first correspondence and the first network information. For specific implementation of the first correspondence, refer to the related descriptions in S702. Details are not described herein again.

S1310: The SMF network element sends a create session management context response message to the AMF network element, and the AMF network element receives the create session management context response message from the SMF network element.

S1311: The SMF network element sends an N1N2 message to the AMF network element, and the AMF network element receives the N1N2 message from the SMF network element.

The first identifier may be carried in the create session management context response message, and/or may be carried in the N1N2 message. Alternatively, the first identifier may be carried in one or more of the following carried in the N1N2 message: N2 session management information, N1 session management information, a PDU session establishment accept message, or a protocol configuration option PCO.

S1312: The AMF network element sends the PDU session establishment accept message to the (R)AN network element, and the (R)AN network element receives the PDU session establishment accept message from the AMF network element.

The AMF network element may obtain the first identifier in the N1N2 message or the create session management context response message, to generate the PDU session establishment accept message that carries the first identifier, and send the PDU session establishment accept message to the (R)AN network element. In addition, for specific implementation of S1309 to S1312, refer to the related descriptions in S1006 and S702. Details are not described herein again.

S1313: The (R)AN network element sends the PDU session establishment accept message to the UE, and the UE receives the PDU session establishment accept message from the (R)AN network element.

The PDU session establishment accept message may be transparently transmitted via the (R)AN network element, to be sent to the UE. In this way, the UE may access the first PVS based on the first identifier in the PDU session establishment accept message, to obtain a credential of a first NPN, thereby accessing the first NPN.

It can be learned that, different from the registration procedure shown in FIG. 8 and the PDU session establishment procedure shown in FIG. 10, the procedure shown in FIG. 13 is a combination of the registration procedure and the PDU session establishment procedure. In other words, the UE may send the first network information to the AMF network element by using the registration procedure, but the AMF network element may send the first network information to the SMF network element in the PDU session establishment procedure. This is not limited. For example, the AMF network element may alternatively send the first network information to the SMF network element in the registration procedure, but the SMF network element may send the first identifier to the UE in the PDU session establishment procedure.

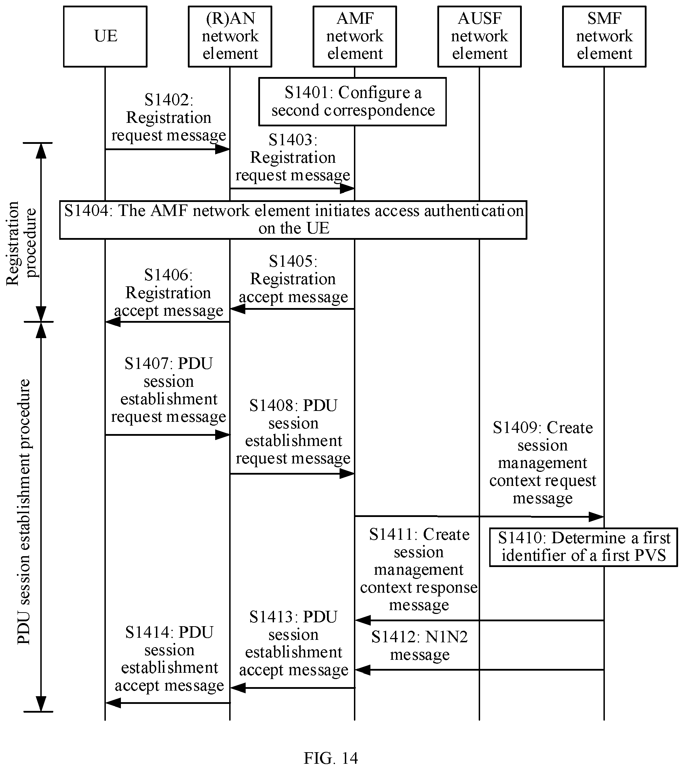

For example, FIG. 14 is a schematic flowchart 8 of a communication method according to an embodiment of this application. The communication method is applicable to communication between the UE (the terminal device), the (R)AN network element, the AMF network element, the AUSF network element, and the SMF network element (the first network element) that are shown in FIG. 5. As shown in FIG. 14, the communication method may include the following steps.

S1401: A second correspondence is configured for the AMF network element.

For specific implementation of S1401, refer to the related descriptions in S1201 and the first implementation scenario. Details are not described herein again.

S1402: The UE sends a registration request message to the (R)AN network element, and the (R)AN network element receives the registration request message from the UE.

S1403: The (R)AN network element sends the registration request message to the AMF network element, and the AMF network element receives the registration request message from the (R)AN network element.

The registration request message carries first network information. In this way, the AMF network element may determine, based on a second correspondence and the first network information, information that can be identified by the SMF network element, for example, determine network information corresponding to a first PVS, and then store the information. For specific implementation of S1402, refer to the related descriptions in S801, S701, and the first application scenario. Details are not described herein again.

S1404: The AMF network element initiates access authentication on the UE.

For specific implementation of S1404, refer to the related descriptions in S803. Details are not described herein again.

S1405: The AMF network element sends a registration accept message to the (R)AN network element, and the (R)AN network element receives the registration accept message from the AMF network element.

S1406: The (R)AN network element sends the registration accept message to the UE, and the UE receives the registration accept message from the (R)AN network element.

The registration accept message does not carry a first identifier. In other words, in the registration procedure in S 1402 to S1406, the AMF network element may store only information that can be identified by the SMF network element, but does not send the first identifier. In addition, a sequence of performing S1401 and performing S1402 to S1406 is not limited.

S1407: The UE sends a PDU session establishment request message to the (R)AN network element, and the (R)AN network element receives the PDU session establishment request message from the UE.

For specific implementation of S1407, refer to the related descriptions in S1306. Details are not described herein again.

S1408: The (R)AN network element sends the PDU session establishment request message to the AMF network element, and the AMF network element receives the PDU session establishment request message from the (R)AN network element.

S1409: The AMF network element sends a create session management context request message to the SMF network element, and the SMF network element receives the create session management context request message from the AMF network element.

After receiving the PDU session establishment request message from the (R)AN network element, the AMF network element may carry the PDU session establishment request message in the create session management context request message, and also carry the information that can be identified by the SMF network element in the create session management context request message, for example, carry the network information corresponding to the first PVS in the create session management context request message, to send the create session management context request message to the SMF network element. In addition, for specific implementation of S1409, refer to the related descriptions in S1308, S701, and the first application scenario. Details are not described herein again.

S1410: The SMF network element determines the first identifier of the first PVS.

The SMF network element may determine the first identifier based on a first correspondence and the information that can be identified by the SMF network element, for example, the network information corresponding to the first PVS. For specific implementation of the first correspondence, refer to the related descriptions in S702. Details are not described herein again.

S1411: The SMF network element sends a create session management context response message to the AMF network element, and the AMF network element receives the create session management context response message from the SMF network element.

S1412: The SMF network element sends an N1N2 message to the AMF network element, and the AMF network element receives the N1N2 message from the SMF network element.

The first identifier may be carried in the create session management context response message, and/or may be carried in the N1N2 message, or may be carried in one or more of the following carried in the N1N2 message: N2 session management information, N1 session management information, a PDU session establishment accept message, or a protocol configuration option PCO.

S1413: The AMF network element sends the PDU session establishment accept message to the (R)AN network element, and the (R)AN network element receives the PDU session establishment accept message from the AMF network element.

The AMF network element may obtain the first identifier in the N1N2 message or the create session management context response message, to generate the PDU session establishment accept message that carries the first identifier, and send the PDU session establishment accept message to the (R)AN network element. In addition, for specific implementation of S1410 to S1413, refer to the related descriptions in S1006 and S702. Details are not described herein again.

S1414: The (R)AN network element sends the PDU session establishment accept message to the UE, and the UE receives the PDU session establishment accept message from the (R)AN network element.

The PDU session establishment accept message may be transparently transmitted via the (R)AN network element, to be sent to the UE. In this way, the UE may access the first PVS based on the first identifier in the PDU session establishment accept message, to obtain a credential of a first NPN, thereby accessing the first NPN.

It can be learned that, in the procedure shown in FIG. 14, the AMF network element provides, in the PDU session establishment procedure, the SMF network element with the information that can be identified by the SMF network element. This is different from the registration procedure shown in FIG. 13. However, this is not limited. For example, the AMF network element may alternatively send, to the SMF network element in the registration procedure, the information that can be identified by the SMF network element, but the SMF network element may send the first identifier to the UE in the PDU session establishment procedure.

In conclusion, with reference to the communication methods shown in FIG. 7 to FIG. 14, it can be learned that, because the first network element has the first correspondence between the identifier of the first PVS and the first network information, the first network element may send the corresponding first identifier to the terminal device based on the first network information of the terminal device and the first correspondence, that is, send the first identifier needed by the terminal device to the terminal device, so that the terminal device can access the first NPN that the terminal device wants to access, to obtain a corresponding network service, and improve user experience.

With reference to FIG. 7 to FIG. 14, the foregoing specifically describes the procedure in which the first network element sends the first identifier to the terminal device. The following specifically describes a procedure in which the first network element sends the first correspondence to the terminal device.

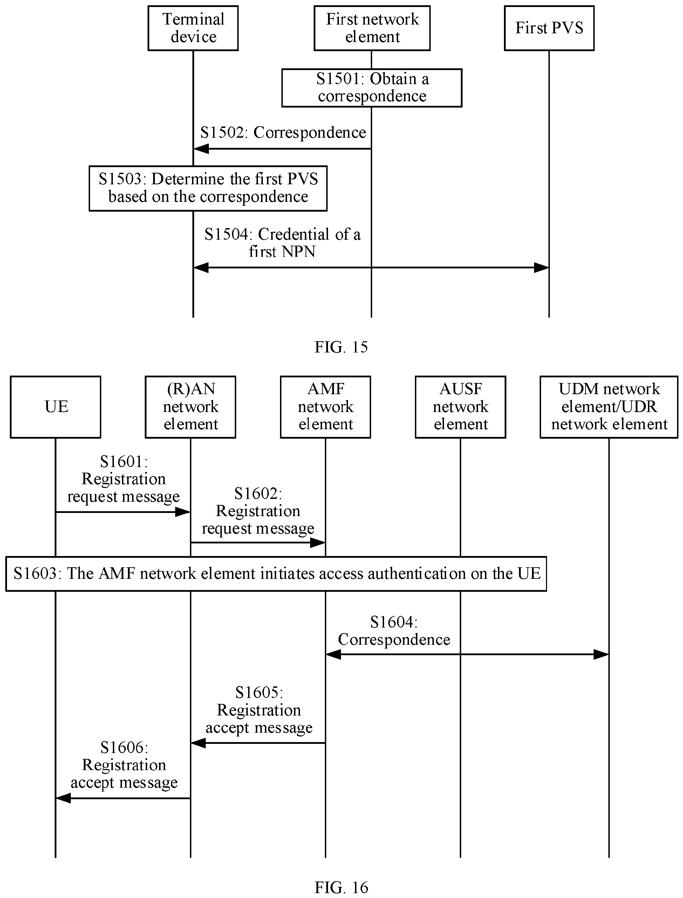

For example, FIG. 15 is a schematic flowchart 9 of a communication method according to an embodiment of this application. Specifically, FIG. 15 shows a procedure in which a first network element sends a first identifier to a terminal device.

As shown in FIG. 15, the communication method includes the following steps.

S1501: The first network element obtains a correspondence.

With reference to the related descriptions in S702, it can be learned that the correspondence may be a correspondence between an identifier of a PVS and network information, and includes the first correspondence. The network information may include network information of an NPN and/or network information corresponding to the PVS. In a possible implementation, there may be one or more correspondences. In other words, each correspondence may indicate a correspondence between each of identifiers of a plurality of PVSs and one or more pieces of network information.

The correspondence may be in the first network element locally, or may be obtained by the first network element from another network element, for example, a unified data management network element. For example, the first network element may obtain the correspondence from the unified data management network element by using a first request service. The unified data management network element has the correspondence.

Specifically, the first network element may send a first request message to the unified data management network element by using the first request service. The first request message may request the foregoing correspondence. A name of the first request message is not limited. For example, the first request message may be a Nudm_SDM_Get message sent to the unified data management network element by using a Nudm_SDM_Get service. Correspondingly, the unified data management network element may receive the first request message from the first network element, for example, by using the first request service. Then, the unified data management network element may send a first response message to the first network element, for example, by using the first request service. The first response message may be for carrying the correspondence. In other words, the correspondence may be carried in the first response message. A name of the first response message is not limited. For example, the first response message may be a Nudm_SDM_Get response message. It can be learned that, in a manner of the request service, the first network element may obtain the correspondence from the unified data management network element only when necessary, and does not need to store the correspondence at any time. In this way, storage space of the first network element can be saved, a resource configuration can be optimized, and running efficiency can be improved.

It should be understood that obtaining the foregoing correspondence by using the first request service is merely an example, and constitutes no limitation. For example, the first network element may alternatively obtain the correspondence in another manner, for example, by using a subscription service.

S1502: The first network element sends the correspondence to the terminal device, and the terminal device receives the correspondence from the first network element.

In some design solutions, if the first network element is an access management network element, the correspondence may be carried in one or more of the following: an N2 message, a registration accept message, a session establishment accept message, for example, a PDU session establishment accept message, or a non-access stratum mobility management transport message. For specific implementation of the N2 message, the registration accept message, and the session establishment accept message, refer to the related descriptions in S702. For specific implementation of the non-access stratum mobility management transport message, refer to the related descriptions in the second implementation scenario. Details are not described herein again.

It should be noted that the registration accept message and the session establishment accept message may be carried in the N2 message. In other words, that the N2 message carries the correspondence may be that the N2 message carries the first identifier, or may be that the message carried in the N2 message carries the correspondence.

In some other design solutions, if the first network element is a session management network element, the correspondence may be carried in one or more of the following: a create session management context response message, an N1N2 message, a session establishment accept message, for example, a PDU session establishment accept message, or a PCO. For specific implementation of the create session management context response message, the N1N2 message, the session establishment accept message, and the PCO, refer to the related descriptions in S702. Details are not described herein again.

It should be noted that, if the N1N2 message carries the correspondence, the N1N2 message may carry the correspondence, N2 session management information and/or N1 session management information that are/is carried in the N1N2 message may carry the correspondence, the session establishment accept message carried in the N1 session management information may carry the correspondence, or the PCO carried in the PDU session establishment accept message may carry the correspondence. This is not limited.

S1503: The terminal device determines a first PVS based on the correspondence.

The terminal device has first network information locally. In this way, the terminal device may determine the first correspondence in the correspondence based on the first network information, thereby determining the first PVS based on the first correspondence, for example, determining a first identifier of the first PVS.

S1504: The terminal device obtains a credential of a first NPN from the first PVS.

The terminal device may access the first PVS based on the first identifier, to obtain the credential of the first NPN from the first PVS, so that the terminal device accesses the first NPN based on the credential of the first NPN.

Optionally, with reference to the embodiment shown in FIG. 15, in an eighth implementation scenario, a policy control network element, for example, a PCF network element has the foregoing correspondence. In this way, the first network element may further obtain the correspondence from the policy control network element. In an implementation, if the first network element is the access management network element, the access management network element may send a sixth message to the policy control network element. Correspondingly, the policy control network element may send, to the access management network element, a seventh message that carries the correspondence, so that the access management network element obtains the correspondence. In addition, for specific implementation of the sixth message and the seventh message, refer to the related descriptions in the sixth implementation scenario. Details are not described herein again. In another implementation, if the first network element is the session management network element, the session management network element may send an eighth message to the policy control network element. Correspondingly, the policy control network element may send, to an access management network element, a ninth message that carries the correspondence, so that the access management network element obtains the correspondence. In addition, for specific implementation of the eighth message and the ninth message, refer to the related descriptions in the sixth implementation scenario. Details are not described herein again.

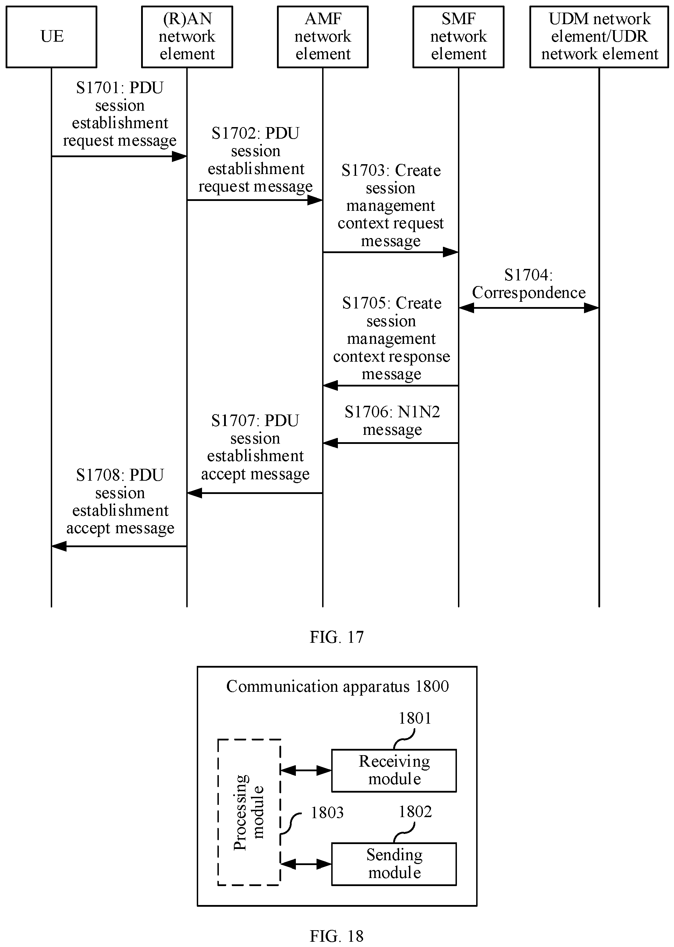

With reference to FIG. 15, the foregoing describes an overall procedure of the communication method provided in this embodiment of this application. With reference to FIG. 16 and FIG. 17, the following describes in detail procedures of the communication method shown in FIG. 15 in specific application scenarios.

For example, FIG. 16 is a schematic flowchart 10 of a communication method according to an embodiment of this application. The communication method is applicable to communication between the UE (the terminal device), the (R)AN network element, the AMF network element (the first network element), and the UDM network element/UDR network element that are shown in FIG. 5. As shown in FIG. 16, the communication method may include the following steps.

S1601: The UE sends a registration request message to the (R)AN network element, and the (R)AN network element receives the registration request message from the UE.

The UE may camp on a cell of the (R)AN network element, to send the registration request message to the (R)AN network element. The registration request message may carry first network information, or may not carry the first network information. This is not limited herein. In addition, for specific implementation in which the registration request message carries the first network information, refer to the related descriptions in S701. Details are not described herein again.

S1602: The (R)AN network element sends the registration request message to the AMF network element, and the AMF network element receives the registration request message from the (R)AN network element.

S1603: The AMF network element initiates access authentication on the UE.

For specific implementation of S1603, refer to the related descriptions in S803. Details are not described herein again.

S1604: The AMF network element obtains a correspondence from the UDM network element/UDR network element.

For specific implementation of S1604, refer to the related descriptions in S1501. Details are not described herein again.

S1605: The AMF network element sends a registration accept message to the (R)AN network element, and the (R)AN network element receives the registration accept message from the AMF network element.

The registration accept message carries the foregoing correspondence. For specific implementation of S1605, refer to the related descriptions in S1502. Details are not described herein again.

S1606: The (R)AN network element sends the registration accept message to the UE, and the UE receives the registration accept message from the (R)AN network element.

The registration accept message may be transparently transmitted via the (R)AN network element, to be sent to the UE. In this way, the UE may determine a first PVS based on the correspondence in the registration accept message, to obtain a credential of a first NPN from the first PVS, thereby accessing the first NPN.

For example, FIG. 17 is a schematic flowchart 10 of a communication method according to an embodiment of this application. The communication method is applicable to communication between the UE (the terminal device), the (R)AN network element, the AMF network element, the SMF network element (the first network element), and the UDM network element/UDR network element that are shown in FIG. 5. As shown in FIG. 17, the communication method may include the following steps.

S1701: The UE sends a PDU session establishment request message to the (R)AN network element, and the (R)AN network element receives the PDU session establishment request message from the UE.

After completing a registration procedure, the UE may send the PDU session establishment request message to the (R)AN network element, to request the SMF network element to establish a PDU session of the UE. The PDU session establishment request message may carry first network information, or may not carry the first network information. This is not limited herein. In addition, for a specific implementation in which the PDU session establishment request message carries the first network information, refer to the related descriptions in S701. Details are not described herein again.

S1702: The (R)AN network element sends the PDU session establishment request message to the AMF network element, and the AMF network element receives the PDU session establishment request message from the (R)AN network element.

S1703: The AMF network element sends a create session management context request message to the SMF network element, and the SMF network element receives the create session management context request message from the AMF network element.

The PDU session establishment request message may be carried in the create session management context request message.

S1704: The SMF network element obtains a correspondence from the UDM network element/UDR network element.

For specific implementation of S1704, refer to the related descriptions in S1501. Details are not described herein again.

S1705: The SMF network element sends a create session management context response message to the AMF network element, and the AMF network element receives the create session management context response message from the SMF network element.

S1706: The SMF network element sends an N1N2 message to the AMF network element, and the AMF network element receives the N1N2 message from the SMF network element.

The SMF network element may register connection management of the PDU session on the UDM network element, obtain session management subscription information, and send the create session management context response message to the AMF network element. In addition, the SMF network element may initiate authentication on the UE, and send the N1N2 message to the AMF network element based on an authentication result. The correspondence may be carried in the create session management context response message, and/or may be carried in the N1N2 message, or may be carried in one or more of the following carried in the N1N2 message: N2 session management information, N1 session management information, a PDU session establishment accept message, or a protocol configuration option PCO.

S1707: The AMF network element sends the PDU session establishment accept message to the (R)AN network element, and the (R)AN network element receives the PDU session establishment accept message from the AMF network element.

The AMF network element may obtain the correspondence in the N1N2 message, generate the PDU session establishment accept message that carries the correspondence, and send the PDU session establishment accept message to the (R)AN network element. In addition, for specific implementation of S1705 to S1707, refer to the related descriptions in S702. Details are not described herein again.

S1708: The (R)AN network element sends the PDU session establishment accept message to the UE, and the UE receives the PDU session establishment accept message from the (R)AN network element.

The PDU session establishment accept message may be transparently transmitted via the (R)AN network element, to be sent to the UE. In this way, the UE may determine a first PVS based on the correspondence in the PDU session establishment accept message, to obtain a credential of a first NPN from the first PVS, thereby accessing the first NPN.

It can be learned that, different from the registration procedure shown in FIG. 16, the procedure shown in FIG. 17 is a PDU session establishment procedure. In other words, the UE can obtain the correspondence and access the first NPN regardless of the registration procedure or the PDU session establishment procedure, so that access reliability can be improved.

It should be understood that the foregoing implementations of this application are merely some examples, and constitutes no limitation. For example, in some design solutions, the first network element may determine the first network information in the plurality of pieces of network information based on location information of the terminal device, to send, to the terminal device, the first identifier of the first PVS that corresponds to the first network information. For specific implementation of the plurality of pieces of network information, refer to the related descriptions corresponding to FIG. 7 and FIG. 15. Details are not described herein again. Alternatively, the first network element may directly determine the first identifier of the first PVS in identification information of the plurality of PVSs based on location information of the terminal device, to send the first identifier of the first PVS to the terminal device.

Specifically, in some scenarios, if the first network element is the access management network element, in the registration procedure, the access management network element may obtain the location information of the terminal device, for example, a cell identifier, from an access network device on which the terminal device currently camps. In this way, the access management network element may determine the first network information in the plurality of pieces of network information based on the location information of the terminal device, to determine the first identifier of the first PVS based on the first network information, and send the first identifier of the first PVS to the terminal device, so that the terminal device can access the first NPN that the terminal device wants to access. Alternatively, the access management network element may directly determine the first identifier of the first PVS in the identification information of the plurality of PVSs based on the location information of the terminal device, to send the first identifier of the first PVS to the terminal device.

In some other scenarios, if the first network element is the session management network element, in the registration procedure or the session establishment procedure, the access management network element may obtain the location information of the terminal device from an access network device on which the terminal device currently camps. Further, in an implementation, the access management network element may determine the first network information in the plurality of pieces of network information based on the location information of the terminal device, to send the first network information to the session management network element. In this way, the session management network element may determine the first identifier of the first PVS based on the first network information, to send the first identifier of the first PVS to the terminal device. Alternatively, in another implementation, the access management network element may send the location information of the terminal device to the session management network element. In this way, the session management network element may determine the first network information in the plurality of pieces of network information based on the location information of the terminal device, to send the first identifier of the first PVS to the terminal device, so that the terminal device can access the first NPN that the terminal device wants to access. Alternatively, the session management network element may directly determine the first identifier of the first PVS in the identification information of the plurality of PVSs based on the location information of the terminal device, to send the first identifier of the first PVS to the terminal device.

It should be noted that, if the access management network element obtains the location information of the terminal device in the registration procedure, the access management network element may send the location information of the terminal device or the first network information to the session management network element in the registration procedure or the session establishment procedure. If the access management network element obtains the location information of the terminal device in the session establishment procedure, the access management network element may send the location information of the terminal device or the first network information to the session management network element in the session establishment procedure.

In conclusion, with reference to the communication methods shown in FIG. 15 to FIG. 17, it can be learned that, because the first network element may send the correspondence between the identifier of the PVS and the network information to the terminal device, the terminal device may determine the corresponding first identifier based on the correspondence, so that the terminal device accesses the first NPN that the terminal device wants to access, and obtains the corresponding network service, to improve user experience.

The communication methods provided in embodiments of this application are described in detail based on FIG. 7 to FIG. 17. With reference to FIG. 18 to FIG. 20, the following describes in detail communication apparatuses configured to perform the communication methods provided in embodiments of this application.

For example, FIG. 18 is a schematic diagram 1 of a structure of a communication apparatus according to an embodiment of this application. As shown in FIG. 18, the communication apparatus 1800 includes a receiving module 1801 and a sending module 1802. For ease of description, FIG. 18 shows only main components of the communication apparatus.

In some embodiments, the communication apparatus 1800 may be applied to the communication system shown in FIG. 6, and perform the function of the first network element in the communication method shown in FIG. 7, perform the function of the AMF network element in the communication method shown in FIG. 8 or FIG. 9, or perform the function of the SMF network element in the communication method shown in any one of FIG. 10 to FIG. 14.

The receiving module 1801 is configured to receive first network information of a terminal device.

The sending module 1802 is configured to send a first identifier of a first provisioning server PVS to the terminal device. The first network information includes network information of a first non-public network NPN and/or network information corresponding to the first PVS, and the first identifier corresponds to the first network information.

In a possible design solution, the network information of the first NPN may include one or more of the following: first network slice selection assistance information NSSAI, a first data network name DNN, an identifier of a subscription owner standalone non-public network SO-SNPN, or a group identifier of the SO-SNPN.

In another possible design solution, the network information corresponding to the first PVS may include one or more of the following: second NSSAI or a second DNN.

In a possible design solution, the communication apparatus 1800 may be an access management network element, and the first network information may be carried in one or more of the following: an N2 message, a registration request message, or a packet data unit PDU session establishment request message.

In a possible design solution, the communication apparatus 1800 may be the access management network element, and the first identifier may be carried in one or more of the following: an N2 message, a registration accept message, a PDU session establishment accept message, or a non-access stratum mobility management transport message

In a possible design solution, the communication apparatus 1800 may be a session management network element. The receiving module 1801 may be further configured to receive the network information of the first NPN or the network information corresponding to the first PVS from an access management network element.

Optionally, when the network information corresponding to the first PVS is received from the access management network element, the network information corresponding to the first PVS is obtained by the access management network element based on the network information of the first NPN from the terminal device, where a second correspondence between the network information of the first NPN and the network information corresponding to the first PVS is configured for the access management network element.

In a possible design solution, the communication apparatus 1800 may be the session management network element, and the first network information may be carried in one or more of the following: a PDU session establishment request message or a create session management context request message.

In a possible design solution, the communication apparatus 1800 may be the session management network element, and the first identifier may be carried in one or more of the following: a create session management context response message, an N1N2 message, N2 session management information, N1 session management information, a PDU session establishment accept message, or a protocol configuration option PCO.

In a possible design solution, after the receiving module 1801 receives the first network information of the terminal device, and before the sending module 1802 sends the first identifier of the first PVS to the terminal device, the sending module 1802 may be further configured to send a first authentication request message to an authentication server, and the receiving module 1801 may be further configured to receive a first authentication response message, where the first authentication request message may request to perform authentication on the terminal device, and the first authentication response message may indicate that the authentication on the terminal device fails.

Optionally, the first authentication response message carries the first identifier

In a possible design solution, the communication apparatus 1800 has a first correspondence between the first identifier and the first network information.

In another possible design solution, the first correspondence may be obtained by the communication apparatus 1800 from an application server.

Optionally, the receiving module 1801 and the sending module 1802 may be integrated into one module, for example, a transceiver module (not shown in FIG. 18). The transceiver module is configured to implement a sending function and a receiving function of the communication apparatus 1800.

Optionally, the communication apparatus 1800 may further include a processing module 1803 (shown in a dashed-line box in FIG. 18). The processing module 1803 is configured to implement a processing function of the communication apparatus 1800.

Optionally, the communication apparatus 1800 may further include a storage module (not shown in FIG. 18). The storage module stores a program or instructions. When the processing module 1803 executes the program or the instructions, the communication apparatus 1800 can perform the function of the first network element in the communication method shown in FIG. 7, perform the function of the AMF network element in the communication method shown in FIG. 8 or FIG. 9, or perform the function of the SMF network element in the communication method shown in any one of FIG. 10 to FIG. 14.

It should be understood that the processing module 1803 in the communication apparatus 1800 may be implemented by using a processor or a processor-related circuit component, and may be a processor or a processing unit. The transceiver module may be implemented by using a transceiver or a transceiver-related circuit component, and may be a transceiver or a transceiver unit.

It should be noted that the communication apparatus 1800 may be a network device, for example, the first network element, the AMF network element, or the SMF network element, a chip (system) or another part or component that may be disposed in the network device, or an apparatus that includes the network device. This is not limited in this application.

In addition, for a technical effect of the communication apparatus 1800, refer to the technical effect of the communication method shown in any one of FIG. 7 to FIG. 14. Details are not described herein again.

In some other embodiments, the communication apparatus 1800 may alternatively perform a function of the authentication server in the communication method shown in FIG. 9 or FIG. 11.

The receiving module 1801 is configured to receive a second authentication request message.

The sending module 1802 is configured to send a second authentication response message to a first network element.

The second authentication request message requests to perform authentication on a terminal device, the second authentication response message indicates that the authentication on the terminal device fails, and the second authentication response message carries a first identifier of a first PVS.

Optionally, the receiving module 1801 and the sending module 1802 may be integrated into one module, for example, a transceiver module (not shown in FIG. 18). The transceiver module is configured to implement a sending function and a receiving function of the communication apparatus 1800.

Optionally, the communication apparatus 1800 may further include a processing module 1803 (shown in a dashed-line box in FIG. 18). The processing module 1803 is configured to implement a processing function of the communication apparatus 1800.

Optionally, the communication apparatus 1800 may further include a storage module (not shown in FIG. 18). The storage module stores a program or instructions. When the processing module 1803 executes the program or the instructions, the communication apparatus 1800 can perform the function of the authentication server in the communication method shown in FIG. 9 or FIG. 11.

It should be understood that the processing module 1803 in the communication apparatus 1800 may be implemented by using a processor or a processor-related circuit component, and may be a processor or a processing unit. The transceiver module 1802 may be implemented by using a transceiver or a transceiver-related circuit component, and may be a transceiver or a transceiver unit.

It should be noted that the communication apparatus 1800 may be a network device, for example, the AAA-S or the DN-AAA, a chip (system) or another part or component that may be disposed in the network device, or an apparatus that includes the network device. This is not limited in this application.

In still some other embodiments, the communication apparatus 1800 may be applied to the communication system shown in FIG. 6, and perform the function of the terminal device in the communication method shown in FIG. 7, or perform the function of the UE in the communication method shown in any one of FIG. 8 to FIG. 14.

The sending module 1802 is configured to send first network information to a first network element.

The receiving module 1801 is configured to receive a first identifier of a first PVS from the first network element. The first network information includes network information of a first NPN and/or network information corresponding to the first PVS, and the first identifier corresponds to the first network information.

In a possible design solution, the communication apparatus 1800 may further include a processing module 1803 (shown by a dashed line in FIG. 18). After the receiving module 1801 receives the first identifier of the first PVS from the first network element, the processing module 1803 may be configured to obtain a credential of the first NPN from the first PVS based on the first identifier, and access the first NPN based on the credential of the first NPN.

Optionally, the network information of the first NPN may include one or more of the following: first NSSAI, a first DNN, an identifier of an SO-SNPN, or a group identifier of the SO-SNPN.

Optionally, the network information corresponding to the first PVS may include one or more of the following: second NSSAI or a second DNN.

In a possible design solution, the first network element may be an access management network element, and the first network information may be carried in one or more of the following: an N2 message, a registration request message, or a PDU session establishment request message.

In a possible design solution, the first network element may be an access management network element, and the first identifier may be carried in one or more of the following: an N2 message, a registration accept message, a PDU session establishment accept message, or a non-access stratum mobility management transport message.

In a possible design solution, the first network element may be a session management network element, and the first network information may be carried in one or more of the following: a PDU session establishment request message or a create session management context request message.

In a possible design solution, the first network element may be a session management network element, and the first identifier may be carried in one or more of the following: a create session management context response message, an N1N2 message, N2 session management information, N1 session management information, a PDU session establishment accept message, or a PCO.

Optionally, the receiving module 1801 and the sending module 1802 may be integrated into one module, for example, a transceiver module (not shown in FIG. 18). The transceiver module is configured to implement a sending function and a receiving function of the communication apparatus 1800.

Optionally, the communication apparatus 1800 may further include a storage module (not shown in FIG. 18). The storage module stores a program or instructions. When the processing module 1803 executes the program or the instructions, the communication apparatus 1800 can perform the function of the terminal device in the communication method shown in FIG. 7, or perform the function of the UE in the communication method shown in any one of FIG. 8 to FIG. 14.

It should be understood that the processing module 1803 in the communication apparatus 1800 may be implemented by using a processor or a processor-related circuit component, and may be a processor or a processing unit. The transceiver module 1802 may be implemented by using a transceiver or a transceiver-related circuit component, and may be a transceiver or a transceiver unit.

It should be noted that the communication apparatus 1800 may be a terminal device, for example, the UE, a chip (system) or another part or component that may be disposed in the terminal device, or an apparatus that includes the terminal device. This is not limited in this application.

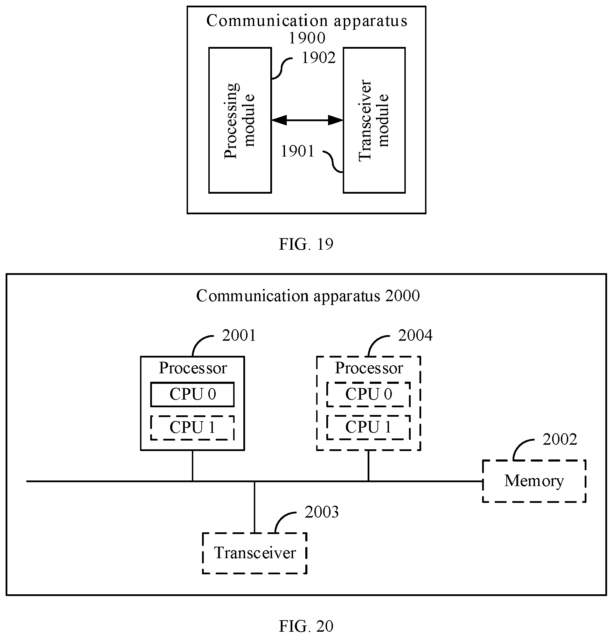

For example, FIG. 19 is a schematic diagram 2 of a structure of a communication apparatus according to an embodiment of this application. As shown in FIG. 19, the communication apparatus 1900 includes a transceiver module 1901 and a processing module 1902. For ease of description, FIG. 19 shows only main components of the communication apparatus.

In some embodiments, the communication apparatus 1900 may be applied to the communication system shown in FIG. 6, and perform the function of the first network element in the communication method shown in FIG. 15, or perform the function of the AMF network element in the communication method shown in FIG. 16 or FIG. 17.

The processing module 1902 is configured to obtain a correspondence.

The transceiver module 1901 is configured to send the correspondence to a terminal device.

The correspondence is a correspondence between an identifier of a PVS and network information, and the network information includes network information of an NPN and/or network information corresponding to the PVS.

In a possible design solution, the processing module 1902 may be further configured to control the transceiver module 1901 to obtain the correspondence from a unified data management network element.

Optionally, the processing module 1902 may be further configured to control, by using a first request service, the transceiver module 1901 to obtain the correspondence from the unified data management network element.

In a possible design solution, the correspondence may include a first correspondence, the first correspondence may be a correspondence between first network information and a first identifier, the first network information may include network information of a first NPN and/or network information corresponding to a first PVS, and the first identifier is an identifier of the first PVS.

Optionally, the network information of the first NPN may include one or more of the following: first NSSAI, a first DNN, an identifier of an SO-SNPN, or a group identifier of the SO-SNPN.

Optionally, the network information corresponding to the first PVS may include one or more of the following: second NSSAI or a second DNN.

In a possible design solution, the communication apparatus may be an access management network element, and the correspondence may be carried in one or more of the following: an N2 message, a registration accept message, a PDU session establishment accept message, or a non-access stratum mobility management transport message

In a possible design solution, the communication apparatus may be a session management network element, and the correspondence may be carried in one or more of the following: a create session management context response message, an N1N2 message, a PDU session establishment accept message, or a PCO.

Optionally, the transceiver module 1901 may include a receiving module and a sending module (not shown in FIG. 19). The receiving module is configured to implement a receiving function of the communication apparatus 1900. The sending module is configured to implement a sending function of the communication apparatus 1900.

Optionally, the communication apparatus 1900 may further include a storage module (not shown in FIG. 19). The storage module stores a program or instructions. When the processing module 1902 executes the program or the instructions, the communication apparatus 1900 can perform the function of the first network element in the communication method shown in FIG. 15, or perform the function of the AMF network element in the communication method shown in FIG. 16 or FIG. 17.

It should be understood that the processing module 1902 in the communication apparatus 1900 may be implemented by using a processor or a processor-related circuit component, and may be a processor or a processing unit. The transceiver module 1901 may be implemented by using a transceiver or a transceiver-related circuit component, and may be a transceiver or a transceiver unit.

It should be noted that the communication apparatus 1900 may be a network device, for example, the first network element, the AMF network element, or the SMF network element, a chip (system) or another part or component that may be disposed in the network device, or an apparatus that includes the network device. This is not limited in this application.

In addition, for a technical effect of the communication apparatus 1900, refer to the technical effect of the communication method shown in any one of FIG. 15 to FIG. 17. Details are not described herein again.

In some other embodiments, the communication apparatus 1900 may be applied to the communication system shown in FIG. 6, and perform the function of the terminal device in the communication method shown in FIG. 15, or perform the function of the UE in the communication method shown in FIG. 16 or FIG. 17.

The transceiver module 1901 is configured to receive a correspondence from a first network element.

The processing module 1902 is configured to determine a first PVS based on the correspondence, and control the transceiver module 1901 to obtain a credential of a first NPN from the first PVS. The correspondence is a correspondence between an identifier of a PVS and network information, and the network information includes network information of an NPN and/or network information corresponding to the PVS.

In a possible design solution, the processing module 1902 is further configured to determine a first identifier of the first PVS based on the correspondence, and control, based on the first identifier of the first PVS, the transceiver module 1901 to obtain the credential of the first NPN from the first PVS. The correspondence includes a correspondence between first network information and the first identifier of the first PVS.

Optionally, the first network information may include network information of the first NPN and/or network information corresponding to the first PVS.

Further, the network information of the first NPN may include one or more of the following: first NSSAI, a first DNN, an identifier of an SO-SNPN, or a group identifier of the SO-SNPN.

Further, the network information corresponding to the first PVS may include one or more of the following: second NSSAI or a second DNN.

In a possible design solution, the first network element may be an access management network element, and the correspondence may be carried in one or more of the following: an N2 message, a registration accept message, a PDU session establishment accept message, or a non-access stratum mobility management transport message.

In a possible design solution, the first network element may be a session management network element, and the correspondence may be carried in one or more of the following: a create session management context response message, an N1N2 message, a PDU session establishment accept message, or a PCO.

Optionally, the transceiver module 1901 may include a receiving module and a sending module (not shown in FIG. 19). The receiving module is configured to implement a receiving function of the communication apparatus 1900, and the sending module is configured to implement a sending function of the communication apparatus 1900.

Optionally, the communication apparatus 1900 may further include a storage module (not shown in FIG. 19). The storage module stores a program or instructions. When the processing module 1902 executes the program or the instructions, the communication apparatus 1900 can perform the function of the terminal device in the communication method shown in FIG. 15, or perform the function of the UE in the communication method shown in FIG. 16 or FIG. 17.

It should be understood that the processing module 1902 in the communication apparatus 1900 may be implemented by using a processor or a processor-related circuit component, and may be a processor or a processing unit. The transceiver module 1901 may be implemented by using a transceiver or a transceiver-related circuit component, and may be a transceiver or a transceiver unit.

It should be noted that the communication apparatus 1900 may be a terminal device, for example, the UE, a chip (system) or another part or component that may be disposed in the terminal device, or an apparatus that includes the terminal device. This is not limited in this application.

In addition, for a technical effect of the communication apparatus 1900, refer to the technical effect of the communication method shown in any one of FIG. 15 to FIG. 17. Details are not described herein again.

In still some other embodiments, the communication apparatus 1900 may alternatively perform the function of the UDM network element/UDR network element in the communication method shown in FIG. 16 or FIG. 17.

The transceiver module 1901 is configured to receive a first request message from a first network element, and send a first response message to the first network element, where the first request message requests a correspondence, the correspondence is a correspondence between an identifier of a PVS and network information, the network information includes: network information of an NPN and/or network information corresponding to the PVS, and the first response message carries the correspondence.

In a possible design solution, the communication apparatus 1900 may further include a processing module 1902. The processing module 1902 is configured to control, by using a first request service, the transceiver module 1901 to receive the first request message from the first network element.

In a possible design solution, the communication apparatus 1900 may further include the processing module 1902. The processing module 1902 is configured to control, by using the first request service, the transceiver module 1901 to send the first response message to the first network element.

Optionally, the transceiver module 1901 may include a receiving module and a sending module (not shown in FIG. 19). The receiving module is configured to implement a receiving function of the communication apparatus 1900. The sending module is configured to implement a sending function of the communication apparatus 1900.

Optionally, the communication apparatus 1900 may further include a storage module (not shown in FIG. 19). The storage module stores a program or instructions. When the processing module 1902 executes the program or the instructions, the communication apparatus 1900 can perform the function of the UDM network element/UDR network element in the communication method shown in FIG. 16 or FIG. 17.

It should be understood that the processing module 1902 in the communication apparatus 1900 may be implemented by using a processor or a processor-related circuit component, and may be a processor or a processing unit. The transceiver module 1901 may be implemented by using a transceiver or a transceiver-related circuit component, and may be a transceiver or a transceiver unit.

It should be noted that the communication apparatus 1900 may be a network device, for example, the UDM network element/UDR network element, a chip (system) or another part or component that may be disposed in the network device, or an apparatus that includes the network device. This is not limited in this application.

In addition, for a technical effect of the communication apparatus 1900, refer to the technical effect of the communication method shown in any one of FIG. 15 to FIG. 17. Details are not described herein again.

For example, FIG. 20 is a schematic diagram 3 of a structure of a communication apparatus according to an embodiment of this application. The communication apparatus may be a terminal device or a network device, or may be a chip (system) or another part or component that may be disposed in the terminal device or the network device. As shown in FIG. 20, the communication apparatus 2000 may include a processor 2001. Optionally, the communication apparatus 2000 may further include a memory 2002 and/or a transceiver 2003. The processor 2001 is coupled to the memory 2002 and the transceiver 2003, for example, may be connected through a communication bus.

The following specifically describes the components of the communication apparatus 2000 with reference to FIG. 20.

The processor 2001 is a control center of the communication apparatus 2000, and may be one processor or may be a collective term of a plurality of processing elements. For example, the processor 2001 is one or more central processing units (central processing units, CPUs), may be an application specific integrated circuit (application specific integrated circuit, ASIC), or may be one or more integrated circuits configured to implement embodiments of this application, for example, one or more microprocessors (digital signal processors, DSPs) or one or more field programmable gate arrays (field programmable gate arrays, FPGAs).

Optionally, the processor 2001 may perform various functions of the communication apparatus 2000 by running or executing a software program stored in the memory 2002 and invoking data stored in the memory 2002.

During specific implementation, in an embodiment, the processor 2001 may include one or more CPUs, for example, a CPU 0 and a CPU 1 shown in FIG. 20.

During specific implementation, in an embodiment, the communication apparatus 2000 may alternatively include a plurality of processors, for example, the processor 2001 and a processor 2004 shown in FIG. 20. Each of the processors may be a single-core processor (single-CPU), or may be a multi-core processor (multi-CPU). The processor herein may refer to one or more devices, circuits, and/or processing cores configured to process data (for example, computer program instructions).

The memory 2002 is configured to store the software program for performing the solutions of this application, and the processor 2001 controls execution of the software program. For a specific implementation, refer to the foregoing method embodiments. Details are not described herein again.

Optionally, the memory 2002 may be a read-only memory (read-only memory, ROM) or another type of static storage device capable of storing static information and instructions, may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of instructions or a data structure and capable of being accessed by a computer, but is not limited thereto. The memory 2002 may be integrated with the processor 2001, or may exist independently and is coupled to the processor 2001 by using an interface circuit (not shown in FIG. 20) of the communication apparatus 2000. This is not specifically limited in this embodiment of this application.

The transceiver 2003 is configured to communicate with another communication apparatus. For example, the communication apparatus 2000 is a terminal device, and the transceiver 2003 may be configured to communicate with a network device or communicate with another terminal device. For another example, the communication apparatus 2000 is a network device, and the transceiver 2003 may be configured to communicate with a terminal device or communicate with another network device.

Optionally, the transceiver 2003 may include a receiver and a transmitter (not separately shown in FIG. 20). The receiver is configured to implement a receiving function, and the transmitter is configured to implement a sending function.

Optionally, the transceiver 2003 may be integrated with the processor 2001, or may exist independently and is coupled to the processor 2001 by using the interface circuit (not shown in FIG. 20) of the communication apparatus 2000. This is not specifically limited in this embodiment of this application.

It should be noted that the structure of the communication apparatus 2000 shown in FIG. 20 does not constitute a limitation on the communication apparatus. An actual communication apparatus may include more or fewer components than those shown in the figure, or combine some components, or use a different component deployment.

In addition, for a technical effect of the communication apparatus 2000, refer to the technical effect of the communication methods in the foregoing method embodiments. Details are not described herein again.

It should be understood that, the processor in embodiments of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. By way of example but not limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, a circuit), firmware, or any combination thereof. When software is used to implement the foregoing embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually represents an "or" relationship between the associated objects, or may represent an " and/or" relationship. A specific meaning depends on a context.

In this application, "at least one" refers to one or more, and " a plurality of" refers to two or more. "At least one of the following" or a similar expression thereof means any combination of these items, and includes a singular item or any combination of plural items. For example, at least one of a, b, or c may indicate: a, b, c, a and b, a and c, b and c, or a, b, and c, where a, b, and c may be singular or plural.

It should be understood that, in various embodiments of this application, sequence numbers of the foregoing processes do not mean an execution sequence. An execution sequence of the processes should be determined based on functions and internal logic of the processes, and should not constitute any limitation on an implementation process of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the functions for all particular applications, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed systems, apparatuses, and methods may be implemented in other manners. For example, the foregoing apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one location, or may be distributed on a plurality of network units. Some or all of the units may be selected based on an actual requirement to achieve the objectives of the solutions in embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions in this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes: any medium that can store program code, such as a USB flash drive, a removable hard disk, a read-only memory (read-only memory, ROM), a random access memory (random access memory, RAM), a magnetic disk, or a compact disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first network element and comprising:
receiving first network information of a terminal device, wherein the first network information comprises network information of a first non-public network NPN and/or network information corresponding to a first provisioning server PVS; and
sending a first identifier of the first PVS to the terminal device, wherein the first identifier corresponds to the first network information.

2. The communication method according to claim 1, wherein the first network element is a session management network element; and
the receiving first network information of a terminal device comprises:
receiving the network information of the first NPN or the network information corresponding to the first PVS from an access management network element.

3. The communication method according to claim 2, wherein when the network information corresponding to the first PVS is received from the access management network element, the network information corresponding to the first PVS is obtained by the access management network element based on the network information of the first NPN from the terminal device, wherein a second correspondence between the network information of the first NPN and the network information corresponding to the first PVS is configured for the access management network element.

4. The communication method according to any one of claims 1 to 3, wherein after the receiving first network information of a terminal device, and before the sending a first identifier of the first PVS to the terminal device, the method further comprises:
sending a first authentication request message, wherein the first authentication request message requests to perform authentication on the terminal device; and
receiving a first authentication response message, wherein the first authentication response message indicates that the authentication on the terminal device fails.

5. The communication method according to claim 4, wherein the sending a first identifier of the first PVS to the terminal device comprises:
determining, based on the first authentication response message, that the authentication on the terminal device fails, and sending the first identifier of the first PVS to the terminal device.

6. The communication method according to claim 4 or 5, wherein the first authentication response message carries the first identifier.

7. The communication method according to any one of claims 1 to 6, wherein the first network element has a first correspondence between the first identifier and the first network information.

8. The communication method according to claim 7, wherein the first correspondence is obtained by the first network element from an application server and/or a default credentials server

9. A communication method, applied to an authentication server and comprising:
receiving a second authentication request message, wherein the second authentication request message requests to perform authentication on a terminal device; and
sending a second authentication response message, wherein the second authentication response message indicates that the authentication on the terminal device fails, and the second authentication response message carries a first identifier of a first PVS.

10. A communication method, applied to a terminal device and comprising:
sending first network information to a first network element, wherein the first network information comprises network information of a first NPN and/or network information corresponding to a first PVS; and
receiving a first identifier of the first PVS from the first network element, wherein the first identifier corresponds to the first network information.

11. The communication method according to claim 10, wherein the first network information is obtained by the terminal device from an access management network element.

12. The communication method according to claim 10 or 11, wherein after the receiving a first identifier of the first PVS from the first network element, the method according to the third aspect may further comprise: obtaining a credential of the first NPN from the first PVS based on the first identifier, and accessing the first NPN based on the credential of the first NPN.

13. A communication method, applied to a first network element and comprising:
obtaining a correspondence, wherein the correspondence is a correspondence between an identifier of a PVS and network information, and the network information comprises network information of an NPN and/or network information corresponding to the PVS; and
sending the correspondence to a terminal device.

14. The communication method according to claim 13, wherein the obtaining a correspondence comprises:
obtaining the correspondence from a unified data management network element.

15. The communication method according to claim 14, wherein the obtaining the correspondence from a unified data management network element comprises:
obtaining the correspondence from the unified data management network element by using a first request service.

16. The communication method according to any one of claims 13 to 15, wherein the correspondence may comprise a first correspondence, the first correspondence may be a correspondence between first network information and a first identifier, the first network information comprises network information of a first NPN and/or network information corresponding to a first PVS, and the first identifier is an identifier of the first PVS.

17. A communication method, applied to a terminal device and comprising:
receiving a correspondence from a first network element, wherein the correspondence is a correspondence between an identifier of a PVS and network information, and the network information comprises network information of an NPN and/or network information corresponding to the PVS;
determining a first PVS based on the correspondence; and
obtaining a credential of a first NPN from the first PVS.

18. The communication method according to claim 17, wherein the determining a first PVS based on the correspondence comprises:
determining a first identifier of the first PVS based on the correspondence, wherein the correspondence comprises a correspondence between first network information and the first identifier of the first PVS; and
the obtaining a credential of a first NPN from the first PVS comprises:
obtaining the credential of the first NPN from the first PVS based on the first identifier of the first PVS.

19. The communication method according to claim 18, wherein the first network information comprises network information of the first NPN and/or network information corresponding to the first PVS.

20. A communication method, applied to a unified data management network element and comprising:
receiving a first request message from a first network element, wherein the first request message requests a correspondence, the correspondence is a correspondence between an identifier of a PVS and network information, and the network information comprises: network information of an NPN and/or network information corresponding to the PVS; and
sending a first response message to the first network element, wherein the first response message carries the correspondence.

21. The communication method according to claim 20, wherein the receiving a first request message from a first network element comprises:
receiving the first request message from the first network element by using a first request service.

22. The communication method according to claim 20, wherein the sending a first response message to the first network element comprises:
sending the first response message to the first network element by using a first request service.

23. A communication apparatus, comprising a receiving module and a sending module, wherein
the receiving module is configured to receive first network information of a terminal device, wherein the first network information comprises network information of a first NPN and/or network information corresponding to a first PVS; and
the sending module is configured to send a first identifier of the first PVS to the terminal device, wherein the first identifier corresponds to the first network information.

24. The communication apparatus according to claim 23, wherein the communication apparatus is an access management network element, and the first network information is carried in one or more of the following: an N2 message, a registration request message, or a packet data unit PDU session establishment request message.

25. The communication apparatus according to claim 24, wherein the communication apparatus is the access management network element, and the first identifier is carried in one or more of the following: an N2 message, a registration accept message, a PDU session establishment accept message, or a non-access stratum mobility management transport message.

26. The communication apparatus according to claim 23, wherein the communication apparatus is a session management network element; and the receiving module is further configured to receive the network information of the first NPN or the network information corresponding to the first PVS from an access management network element.

27. The communication apparatus according to claim 26, wherein when the network information corresponding to the first PVS is received from the access management network element, the network information corresponding to the first PVS is obtained by the access management network element based on the network information of the first NPN from the terminal device, wherein a second correspondence between the network information of the first NPN and the network information corresponding to the first PVS is configured for the access management network element.

28. The communication apparatus according to any one of claims 23, 26, and 27, wherein the communication apparatus is the session management network element, and the first network information is carried in one or more of the following: a PDU session establishment request message or a create session management context request message.

29. The communication apparatus according to any one of claims 23, 26, and 27, wherein the communication apparatus is the session management network element, and the first identifier is carried in one or more of the following:
a create session management context response message, an N1N2 message, N2 session management information, N1 session management information, a PDU session establishment accept message, or a protocol configuration option PCO.

30. The communication apparatus according to any one of claims 23 to 29, wherein after the receiving module receives the first network information of the terminal device, and before the sending module sends the first identifier of the first PVS to the terminal device, the sending module is further configured to send a first authentication request message, wherein the first authentication request message requests to perform authentication on the terminal device; and the receiving module is further configured to receive a first authentication response message, wherein the first authentication response message indicates that the authentication on the terminal device fails.

31. The communication apparatus according to claim 30, wherein the communication apparatus further comprises a processing module, wherein
the processing module is configured to determine, based on the first authentication response message, that the authentication on the terminal device fails, and control the sending module to send the first identifier of the first PVS to the terminal device.

32. The communication apparatus according to claim 29 or 31, wherein the first authentication response message carries the first identifier.

33. A communication apparatus, comprising a receiving module and a sending module, wherein
the receiving module is configured to receive a second authentication request message, wherein the second authentication request message requests to perform authentication on a terminal device; and
the sending module is configured to send a second authentication response message, wherein the second authentication response message indicates that the authentication on the terminal device fails, and the second authentication response message carries a first identifier of a first PVS.

34. A communication apparatus, comprising a receiving module and a sending module, wherein
the sending module is configured to send first network information to a first network element, wherein the first network information comprises network information of a first NPN and/or network information corresponding to a first PVS; and
the receiving module is configured to receive a first identifier of the first PVS from the first network element, wherein the first identifier corresponds to the first network information.

35. The communication apparatus according to claim 34, wherein the first network information is obtained by the communication apparatus from an access management network element.

36. The communication apparatus according to claim 34 or 35, wherein a processing module is configured to:
after the receiving a first identifier of the first PVS from the first network element, obtain a credential of the first NPN from the first PVS based on the first identifier, and access the first NPN based on the credential of the first NPN.

37. The communication method according to claim 1 or 10 or the communication apparatus according to claim 34, wherein the first network element is an access management network element, and the first network information is carried in one or more of the following: an N2 message, a registration request message, or a PDU session establishment request message.

38. The communication method according to claim 1 or 10 or the communication apparatus according to claim 34, wherein the first network element is an access management network element, and the first identifier is carried in one or more of the following: an N2 message, a registration accept message, a PDU session establishment accept message, or a non-access stratum mobility management transport message.

39. The communication method according to claim 1 or 10 or the communication apparatus according to claim 34, wherein the first network element is a session management network element, and the first network information is carried in one or more of the following: a PDU session establishment request message or a create session management context request message.

40. The communication method according to claim 1 or 10 or the communication apparatus according to claim 34, wherein the first network element is a session management network element, and the first identifier is carried in one or more of the following: a create session management context response message, an N1N2 message, N2 session management information, N1 session management information, a PDU session establishment accept message, or a PCO.

41. A communication apparatus, comprising a processing module and a transceiver module, wherein
the processing module is configured to obtain a correspondence, wherein the correspondence is a correspondence between an identifier of a PVS and network information, and the network information comprises network information of an NPN and/or network information corresponding to the PVS; and
the transceiver module is configured to send the correspondence to a terminal device.

42. The communication apparatus according to claim 41, wherein the processing module is further configured to obtain the correspondence from a unified data management network element.

43. The communication apparatus according to claim 42, wherein the processing module is further configured to obtain the correspondence from the unified data management network element by using a first request service.

44. The communication apparatus according to any one of claims 41 to 43, wherein the correspondence may comprise a first correspondence, the first correspondence may be a correspondence between first network information and a first identifier, the first network information comprises network information of a first NPN and/or network information corresponding to a first PVS, and the first identifier is an identifier of the first PVS.

45. The communication apparatus according to claim 44, wherein the correspondence comprises the first correspondence, the first correspondence is the correspondence between the first network information and the first identifier, the first network information comprises the network information of the first NPN and/or the network information corresponding to the first PVS, and the first identifier is the identifier of the first PVS.

46. The communication apparatus according to claim 44 or 45, wherein the communication apparatus is an access management network element, and the correspondence is carried in one or more of the following: an N2 message, a registration accept message, a PDU session establishment accept message, or a non-access stratum mobility management transport message.

47. The communication apparatus according to claim 44 or 45, wherein the communication apparatus is a session management network element, and the correspondence is carried in one or more of the following: a create session management context response message, an N1N2 message, a PDU session establishment accept message, or a PCO.

48. A communication apparatus, comprising a processing module and a transceiver module, wherein
the transceiver module is configured to receive a correspondence from a first network element, wherein the correspondence is a correspondence between an identifier of a PVS and network information, and the network information comprises network information of an NPN and/or network information corresponding to the PVS; and
the processing module is configured to: determine a first PVS based on the correspondence, and control the transceiver module to obtain a credential of a first NPN from the first PVS.

49. The communication apparatus according to claim 48, wherein the processing module is further configured to determine a first identifier of the first PVS based on the correspondence, wherein the correspondence comprises a correspondence between first network information and the first identifier of the first PVS; and
the processing module is further configured to obtain the credential of the first NPN from the first PVS based on the first identifier of the first PVS.

50. The communication apparatus according to claim 49, wherein the first network information comprises network information of the first NPN and/or network information corresponding to the first PVS.

51. The communication apparatus according to claim 50, wherein the processing module is further configured to determine the first identifier of the first PVS based on the correspondence, and control, based on the first identifier of the first PVS, the transceiver module to obtain the credential of the first NPN from the first PVS, wherein the correspondence comprises the correspondence between the first network information and the first identifier of the first PVS.

52. The communication apparatus according to claim 51, wherein the first network information comprises the network information of the first NPN and/or the network information corresponding to the first PVS.

53. The communication method according to any one of claims 1, 10, 13, and 17 or the communication apparatus according to any one of claims 23, 34, 45, and 52, wherein the network information of the first NPN comprises one or more of the following: first network slice selection assistance information NSSAI, a first data network name DNN, an identifier of a subscription owner standalone non-public network SO-SNPN, or a group identifier of the SO-SNPN.

54. The communication method according to any one of claims 1, 10, 13, and 17 or the communication apparatus according to any one of claims 23, 34, 45, and 52, wherein the network information corresponding to the first PVS comprises one or more of the following: second NSSAI or a second DNN.

55. The communication method according to claim 13 or 17 or the communication apparatus according to claim 48, wherein the first network element is an access management network element, and the correspondence is carried in one or more of the following: an N2 message, a registration accept message, a PDU session establishment accept message, or a non-access stratum mobility management transport message.

56. The communication method according to claim 13 or 17 or the communication apparatus according to claim 48, wherein the first network element is a session management network element, and the correspondence is carried in one or more of the following: a create session management context response message, an N1N2 message, a PDU session establishment accept message, or a PCO.

57. A communication apparatus, comprising a processor, wherein the processor is coupled to a memory; and the processor is configured to execute a computer program stored in the memory, to enable the apparatus to perform the method according to any one of claims 1 to 22.

58. A communication system, comprising one or more network devices or one or more terminal devices, wherein the network device or the terminal device is configured to perform the method according to any one of claims 1 to 22.

59. A computer-readable storage medium, wherein the computer-readable storage medium comprises a computer program or instructions; and when the computer program or the instructions are run on a computer, the method according to any one of claims 1 to 22 is enabled to be performed.

60. A computer program product, wherein the computer program product comprises a computer program or instructions; and when the computer program or the instructions are run on a computer, the method according to any one of claims 1 to 22 is enabled to be performed.
